# EUROPEAN PATENT SPECIFICATION

(11) **EP 2 324 919 B1**
(45) Date of publication and mention of the grant of the patent: **13.04.2016**
(21) Application number: 09813124.6
(22) Date of filing: 10.09.2009
(51) Int. Cl.: B01J 35/04, B01D 53/94, B01J 23/63, F01N 3/28

(54) **CATALYST FOR EXHAUST GAS PURIFICATION**
ABGASREINIGUNGSKATALYSATOR
CATALYSEUR POUR PURIFICATION DE GAZ D'ÉCHAPPEMENT

(30) Priority: 10.09.2008 JP 2008231685
(43) Date of publication of application: 25.05.2011
(73) Proprietor: Cataler Corporation, Shizuoka 437-1492 (JP)
(72) Inventor: ITOU Minoru, Shizuoka 437-1492 (JP); TAKEUCHI, Michihiko, Shizuoka 437-1492 (JP); KANAZAWA, Takaaki, Aichi 471-8571 (JP); KAMADA, Masaya, Aichi 471-8571 (JP); SUZUKI, Tadashi, Aichi-gun Aichi 480-1192 (JP); KATOH, Satoru, Aichi-gun Aichi 480-1192 (JP); TAKAHASHI, Naoki, Aichi-gun Aichi 480-1192 (JP)
(74) Representative: Mai, Dörr, Besier
(86) International application number: PCT/JP2009/065863
(87) International publication number: WO 2010/029978

(56) References cited:
- EP-A1- 1 308 200
- WO-A1-2007/088726
- JP-A- 2003 200 049
- JP-A- 2004 239 197
- JP-A- 2004 239 197
- JP-A- 2005 095 762
- JP-A- 2005 095 762
- JP-A- 2006 150 223
- JP-A- 2006 150 223
- JP-A- 2007 181 799
- US-A1- 2007 014 705

## Description

### Technical Field

The present invention relates to an exhaust gas-purifying catalyst.

### Background Art

In recent years, exhaust gas regulations for automobiles and the like have been enforced. To cope with these regulations, various exhaust gas-purifying. catalysts have been developed which are configured to remove nitrogen oxides (NOₓ) and the like in exhaust gas more efficiently. For example, Patent Document 1 discloses an exhaust gas-purifying catalyst containing a support containing cerium oxide, and a precious metal supported by this support. The cerium oxide has high oxygen storage capability and is known to be a component effective to improve the performance of an exhaust gas-purifying catalyst.

These catalysts, however, have the problem that they tend to emit hydrogen sulfide (H₂S) which is to be a cause of unacceptable odors in the course of purifying exhaust gas. In light of this, exhaust gas-purifying catalysts containing nickel (Ni) have been proposed as catalysts that decrease the emission of H₂S (for example, refer to Patent Document 2).
However, Ni is specified as an environmental load substance in many countries and districts. Therefore, exhaust gas-purifying catalysts containing a relatively large amount of Ni have come to be unusable.
Patent Document 3 (=D3) discloses an exhaust gas-purifying catalyst comprising a substrate provided with through-holes through which exhaust gas flows; and a catalyst layer supported by the substrate and containing precious metals and an oxygen storage material (ceria-based), the exhaust gas-purifying catalyst comprising a first part (upstream) to which the exhaust gas is supplied, and a second part (downstream) to which the exhaust gas having passed through the first part is supplied and is smaller in the content of the oxygen storage material per unit volume than the first part. Notwithstanding, there is still room for improvement of the NOₓ purification performance of the catalyst of D3, while the overall exhaust gas purification is kept at a high level.

### Prior Art Documents

### Patent Documents

Patent Document 1: Jpn. Pat. Appln. KOKAI Publication No. 8-155302
Patent Document 2: European Patent Publication No. 244127
Patent Document 3: WO 2007/088726A1

### Disclosure of Invention

It is an object of the present invention to provide an exhaust gas-purifying catalyst whose emission of H₂S being suppressed while having a satisfactory exhaust gas purification performance even without large amount of Ni.

According to the present invention, there is provided an exhaust gas-purifying catalyst comprising:
a substrate provided with one or more through-holes through which exhaust gas flows; and
   a catalyst layer supported by the substrate and containing precious metals supported by a support,
   the exhaust gas-purifying catalyst comprising a first part to which the exhaust gas is supplied, and a second part to which the exhaust gas having passed through the first part is supplied and which is smaller in the content of the oxygen storage material per unit volume than the first part,
   wherein the support in the first part is an oxygen storage material or a mixture or composite oxide of the oxygen storage material and other oxides, the oxygen storage material being selected from the group consisting of oxides of rare earth metals, oxides of transition metals, and mixtures and composites thereof, the support in the second part is oxides other than the oxygen storage material, or a mixture or a composite oxide of the oxide other than the oxygen storage material and the oxygen storage material;
   the precious metals contained in the first part are platinum and rhodium and the precious metal contained in the second part is rhodium;
   the molar ratio of precious metals of the first part per unit volume to that of the second part per unit volume is in a range of 5 to 15;
   the catalyst has a surface area per unit volume in a range of 5000 to 23000 m²/L; and
   the surface area of the second part per unit volume is in a range of 5000 to 7500 m²/L.

### Brief Description of Drawings

FIG. 1 is a schematic view showing an exhaust gas-purifying catalyst according to an embodiment of the present invention.
FIG. 2 is an enlarged sectional view showing a part of the exhaust gas-purifying catalyst shown in FIG. 1.
FIG. 3 is a bar graph showing the amount of H₂S to be emitted.
FIG. 4 is a graph showing the relation between the content D2 of the oxygen storage material per unit volume in the second part and the amount of H₂S to be emitted.
FIG. 5 is a graph showing the relation between the coating widths of the first and second parts and the amounts of H₂S and NOₓ to be emitted.
FIG. 6 is a graph showing the relation between the surface area of the catalyst per unit volume and the amount of H₂S and NOₓ to be emitted.
FIG. 7 is a bar graph showing the amount of H₂S to be emitted.
FIG. 8 is a bar graph showing the amount of NOₓ to be emitted.
FIG. 9 is a bar graph showing the amount of NOₓ to be emitted.
FIG. 10 is a bar graph showing the amount of NOₓ to be emitted.

### Best Mode for Carrying Out the Invention

An embodiment of the present invention will be explained below.

The inventors of the present invention have found in the course of making studies concerning the cause of generation of H₂S and, particularly, the cause of generation of H₂S after a vehicle halts, that there is a difference in the cooling speeds of the catalyst depending on the positions therein.

First, an exhaust gas-purifying catalyst comprising a catalyst layer uniformly containing a precious metal and cerium oxide was prepared. Then, this catalyst was mounted on a vehicle and the operational condition was changed while measuring the temperature of each position at distances of 0, 16, 33, 50, 67 and 83% of the overall length from the upstream end of the substrate. Specifically, first the vehicle was made to run at a speed of about 40 km/h. At this time, the temperature at the upstream end of the catalyst was about 400°C. Then, the vehicle was made to accelerate from a standstill to about 100 km/h at full throttle. The vehicle was then halted and allowed to idle.

As a result, no significant difference was observed between the temperatures of the above positions during a period until the speed of the vehicle reached about 100 km/h. However, it was clarified that the temperature was dropped more scarcely in the vicinity of the downstream end of the catalyst than in the vicinity of the upstream end of the catalyst during the subsequent deceleration period and after the vehicle halted. It was also found that, in particular, the time during which the temperature was kept at 500°C or more was much longer in the vicinity of the downstream end of the catalyst than in the vicinity of the upstream end of the catalyst.

The inventors of the present invention made further studies as to the characteristics of each component of the catalyst and also found that an oxygen storage material among the catalyst components participated in the adsorption and release of H₂S. Though its details have not been clarified, the following mechanism is considered.

Oxygen storage materials such as cerium oxide tend to react with sulfur components such as SO₂ in exhaust gas to produce compounds such as Ce(SO₄)₂ in a low-temperature and oxidizing atmosphere (for example, in normal running). That is, the oxygen storage materials tend to adsorb sulfur components in this circumstance.

In a high-temperature and reducing atmosphere (for example, at the time of high-speed running or grading), on the other hand, SO₂ or H₂S is easily generated by a reducing reaction of the adsorbed sulfur components. That is, in this condition, desorption of sulfur components, in particular emission of H₂S, easily takes place. Particularly, when the temperature of the catalyst is about 500°C or more, the emission of H₂S is prominent and this H₂S is a main cause of offensive odors.

The structures mentioned below are adopted based on the above finding.

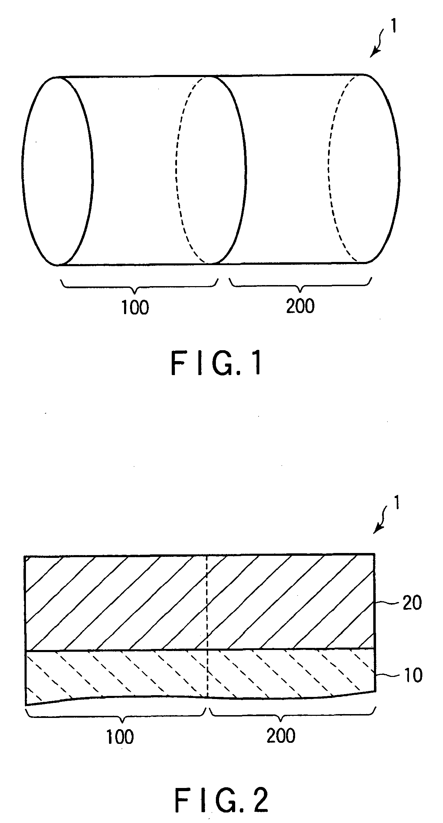

FIG. 1 is a schematic view showing an exhaust gas-purifying catalyst according to an embodiment of the present invention. FIG. 2 is an enlarged sectional view showing a part of the exhaust gas-purifying catalyst shown in FIG. 1.

The exhaust gas-purifying catalyst 1 contains a substrate 10 formed with one or more through-holes through which exhaust gas flows and a catalyst layer 20 supported by the substrate 10.

The catalyst layer 20 contains a support and a precious metal supported by the support. The support serves to increase the specific surface area of the precious metal and also to dissipate the heat produced by the reaction to thereby limit the sintering of the precious metal. The support contains an oxygen storage material. The oxygen storage material serves to absorb and release oxygen in exhaust gas to thereby reduce a variation in the air/fuel ratio in the exhaust gas. The precious metal serves to catalyze an exhaust purification reaction.

Note that the catalyst layer 20 may have a monolayer structure or a multilayer structure. In the latter case, the catalyst layer 20 may contain a layer containing no precious metal.

The exhaust gas-purifying catalyst 1 contains a first part 100 and a second part 200 which are different from each other in the content of the oxygen storage material per unit volume. The first part 100 is a part to which exhaust gas is supplied ahead of the second part 200. The second part 200 is a part to which exhaust gas having passed through the first part 100 is supplied. FIG. 1 shows, as an example, the case where the exhaust gas-purifying catalyst 1 contains only the first part 100 corresponding to the upstream part of the exhaust gas-purifying catalyst 1 and the second part 200 corresponding to the downstream part of the exhaust gas-purifying catalyst 1. The first part 100 and the second part 200 have almost the same structure except that the both differ from each other in the content of the oxygen storage material per unit volume.

In the first part 100, the catalyst layer 20 contains a support and a precious metal supported by the support. In the first part 100, the support is an oxygen storage material, or a mixture or a composite oxide of the oxygen storage material and other oxides.

In the second part 200, the catalyst layer 20 contains a support and a precious metal supported by the support. In this second part 200, this support is oxides other than an oxygen storage material, or a mixture or a composite oxide of the oxide other than an oxygen storage material and an oxygen storage material. As mentioned above, the content D2 of the oxygen storage material per unit volume in the second part 200 is smaller than the content D1 of the oxygen storage material per unit volume in the first part 100.

The catalyst layer 20 may contain no oxygen storage material in the second part 200. Alternatively, the catalyst layer 20 may contain the oxygen storage material in both the first and second parts 100 and 200. In the latter case, the ratio D2/D1 is, for example, 0.5 or less.

As mentioned above, the emission of H₂S becomes prominent when the exhaust gas is reducing gas of high temperature, for example, 500°C or more. The temperature of the downstream part of the exhaust gas-purifying catalyst is dropped more scarcely than that of the upstream part of the exhaust gas-purifying catalyst. Therefore, H₂S is considered to be mainly produced at the downstream part.

As mentioned above, the content D2 of the oxygen storage material of the second part 200 is smaller than the content D1 of the oxygen storage material of the first part 100 in the exhaust gas-purifying catalyst 1. Therefore, in the exhaust gas-purifying catalyst 1, the amount of sulfur components adsorbed to the catalyst layer 20 in the second part 200 is relatively small.

Further, the oxygen storage material contained in the first part 100 of the exhaust gas-purifying catalyst 1 emits at least a part of stored oxygen when the exhaust gas is changed from an oxidizing type to a reducing type. Thus, the exhaust gas which passes through the first part 100 and flows into the second part 200 is relatively reduced in its reducibility. Therefore, the exhaust gas-purifying catalyst 1 scarcely reduces sulfur components which had been adsorbed to the second part 200.

Thus, the exhaust gas-purifying catalyst 1 is suppressed in the adsorption of sulfur components to the catalyst layer 20 in the second part 200. In addition, the sulfur components adsorbed to the second part 200 are scarcely reduced. Accordingly, the exhaust gas-purifying catalyst 1 is suppressed in the emission of H₂S.

Further, when exhaust gas has passed through a catalyst containing an oxygen storage material, exhaust gas controlled in air/fuel ratio by the oxygen storage material contained in the upstream part of the catalyst flows into the downstream part of the catalyst. Specifically, a variation in the air/fuel ratio of the exhaust gas is made to be relatively small at the downstream part of the catalyst by the action of the oxygen storage material contained in the upstream part of the catalyst. Therefore, the necessity for the oxygen storage material is relatively higher in the upstream part of the catalyst, while the oxygen storage material is less required in the downstream part of the catalyst.

This embodiment, as mentioned above, adopts a structure in which the content of the oxygen storage material per unit volume of the second part 200 is made smaller than that of the first part 100. In spite of this, a variation in the air/fuel ratio of the exhaust gas flowing through the catalyst can be suppressed to almost the same level as in the case where the oxygen storage material is, for example, contained uniformly in the whole catalyst. In other words, the adoption of this structure enables the development of sufficient exhaust gas purification performance by using a smaller amount of the oxygen storage material.

When the dimension of the second part 200 along the direction of the flow of the exhaust gas, that is, the coating width of the second part 200 is designed to be 85 to 15% of the overall length of the substrate 10, the emission of H₂S can be more suppressed while achieving higher exhaust gas purification performance and, in particular, higher NOₓ purification performance. In the case of focusing on the ability to suppress the emission of H₂S, the coating width of the second part 200 is preferably designed to be 85 to 40% of the overall length of the substrate 10. Further, in the case of focusing on NOₓ purification performance, the coating width of the second part 200 is preferably designed to be 40 to 15% and more preferably 20 to 15% of the overall length of the substrate 10. In the case of intending to obtain a catalyst well-balanced between the ability to suppress the emission of H₂S and the NOₓ purification performance, the coating width of the second part 200 is preferably designed to be 80 to 20% and more preferably 60 to 20% of the overall length of the substrate 10.

If the coating width of the first part 100 is increased and the coating width of the second part 200 is decreased, the amount of sulfur components to be adsorbed to the catalyst layer 20 is relatively increased and there is therefore the possibility that the suppression of the emission of H₂S from an exhaust gas-purifying catalyst 1 becomes insufficient. If the coating width of the first part 100 is decreased and the coating width of the second part 200 is increased, there is the possibility that the exhaust gas-purifying catalyst 1 is deteriorated in exhaust gas purification performance.

The above oxygen storage material is an essential component in view of developing excellent exhaust gas purification performance in the exhaust gas-purifying catalyst 1. The content of the oxygen storage material in the catalyst layer 20 is preferably in a range of 0.05 to 0.6 mol/L and more preferably in a range of 0.05 to 0.5 mol/L per unit volume of the exhaust gas-purifying catalyst 1. When the content of the oxygen storage material in the catalyst layer 20 is reduced, the oxygen storage performance of the catalyst layer 20 may be deteriorated and there is therefore the possibility of deterioration in the exhaust gas purification performance of the exhaust gas-purifying catalyst 1. When the content of the oxygen storage material in the catalyst layer 20 is increased, sulfur components may tend to be adsorbed to the catalyst layer 20 and there is therefore the possibility that the exhaust gas-purifying catalyst 1 increases the amount of H₂S to be emitted.

Note that the first part 100 and the second part 200 may contain the same type of oxygen storage material or a different type of oxygen storage material.

As the oxygen storage material, oxides of rare earth metals such as cerium oxide, lanthanum oxide, yttrium oxide and praseodymium oxide, oxides of transition metals such as iron oxide and manganese oxide, or mixtures or composite oxides of these compounds are used. Typically, as the oxygen storage material, cerium oxide, a mixture of a cerium oxide and other rare earth metal oxide or a composite oxide of a cerium oxide and other rare earth metal oxide is used.

When a mixture of a cerium oxide and other rare earth metal oxide is used as the oxygen storage material, more excellent NOₓ purification performance can be attained as compared with the case of using a material only constituted of a cerium oxide as the oxygen storage material. Examples of the above other rare earth metal oxide used in combination with cerium oxide include lanthanum oxide and/or yttrium oxide.

The surface area of the exhaust gas-purifying catalyst 1 per unit volume is designed to be in a range of 5000 to 23000 m²/L, and typically in a range of 5000 to 16000 m²/L. Here, the "surface area" is found by a BET plot made based on N₂ adsorption isotherm at 77.4 K. When this surface area is decreased, the amount of exhaust gas to be adsorbed to the catalyst layer 20 may be decreased and there is therefore the possibility of deterioration in exhaust gas purification performance. When this surface area is increased, the amount of sulfur components to be adsorbed to the catalyst layer 20 may be increased and there is therefore the possibility of increase in the amount of H₂S to be emitted. The surface area of the first part 100 per unit volume may be the same as or different from that of the second part 200 per unit volume. For example, if the latter is designed to be smaller than the former, the adsorption of sulfur components to the second part 200 is relatively reduced, making it possible to reduce the amount of H₂S to be emitted by the exhaust gas-purifying catalyst 1 more efficiently.

The surface area of the second part 200 per unit volume is typically smaller than that of the first part 100. The surface area of the second part 200 per unit volume is designed to be in a range of 5000 to 7500 m²/L. If this surface area is decreased, the amount of exhaust gas to be adsorbed to the catalyst layer 20 in the second part 200 may be reduced and there is therefore the possibility of deterioration in exhaust gas purification performance. If this area is increased, the amount of sulfur components to be adsorbed to the catalyst layer 20 in the second part 200 may be increased and there is therefore the possibility of increase in the amount of H₂S to be emitted.

The types and/or contents of materials contained in the support of the first part 100 are different from those of materials contained in the support of the second part 200. The exhaust gas purification performance can be optimized in accordance with the properties of exhaust gas in each region by using the support differing in the type or content of the materials in each of the first and second parts 100 and 200.

As the precious metal contained in the catalyst layer 20, for example, at least one element selected from the group consisting of platinum and rhodium is used.

The first part 100 and the second part 200 are different from each other in the type and content of precious metal. When the first part 100 contains a precious metal different in the type or content from that used for the second part 200, the exhaust gas purification performance can be optimized depending on, for example, the reducibility, oxidizing ability, concentration of sulfur components and temperature of exhaust gas in each region.
The content of a precious metal in the first part 100 is larger than that in the second part 200.

The precious metals contained in the first part 100 being essentially platinum and rhodium and the precious metal contained in the second part 200 being essentially rhodium, the molar ratio of precious metals of the first part 100 to those of the second part 200 is designed to be in a range of 5 to 15.

As the substrate 10, for example, a monolith honeycomb type support substrate may be used. The substrate 10 is typically made of ceramic such as cordierite.

The support contained in the catalyst layer 20 may further contain oxides such as zirconium oxide, alumina and zeolite besides the oxygen storage material. Alternatively, the support may contain composite oxides of the oxygen storage material and these oxides. Further, the support may form a solid solution with the precious metal described above. In other words, the catalyst layer 20 may contain a solid solution of the support and precious metal.

As mentioned above, the catalyst layer 20 may further contain zirconium oxide. In this case, the catalyst layer 20 typically contains a composite oxide of cerium oxide and zirconium oxide. For example, when the first part 100 contains a composite oxide of cerium oxide and zirconium oxide, the molar ratio of zirconium oxide to cerium oxide in the composite oxide is designed to be, for example, in a range of 2 to 12 and typically in a range of 3 to 6. When this molar ratio is designed to be excessively small or large, there may be the case where the exhaust gas-purifying catalyst 1 is slightly deteriorated in NOₓ purification performance.

When the catalyst layer 20 contains a composite oxide of cerium oxide and zirconium oxide, it is preferable that the catalyst layer 20 may further contain oxides of rare earth elements except for cerium oxide. Examples of oxides of rare earth elements other than cerium oxide include lanthanum oxide and yttrium oxide. When the catalyst layer 20 contains the above composite oxide and lanthanum oxide, the amount of lanthanum oxide to be added is designed to be, for example, in a range of 1.5 to 3 mol% based on the above composite oxide. When the catalyst layer 20 contains the above composite oxide and yttrium oxide, the amount of yttrium oxide to be added is designed to be, for example, in a range of 2 to 4 mol% based on the above composite oxide.

The catalyst layer 20 may further contain a binder. The binder, for example, serves to bind support particles among them and support particles with the precious metal more firmly to thereby improve the durability of the exhaust gas-purifying catalyst 1. As the binder, for example, an alumina sol, titania sol or silica sol may be used.

The catalyst layer 20 may further contain an acidic component. The acidic component serves to reduce the amount of sulfur components to be adsorbed and the amount of H₂S to be emitted by reducing the amount of sulfur component-adsorbing sites in the catalyst layer 20. As the acidic components, a component having a larger electronegativity than an element most contained among metal elements constituting the catalyst layer 20 may be used. As such an acidic component, for example, at least one element selected from the group consisting of titanium, tungsten, silicon, molybdenum, phosphorous and niobium may be used. The acidic component is typically contained as a part of the oxide constituting the support in the catalyst layer 20.

The acidic component may be contained in any one or both of the first and second parts 100 and 200. In the former case, the acidic component is typically contained only in the second part 200. In the latter case, the content of the acidic component is typically made to be larger in the second part 200 than in the first part 100. Note that, in the latter case, the acidic components contained in the first and second parts 100 and 200 may be the same or different from each other.

The content of the oxygen storage material per unit volume in each of the first and second parts 100 and 200 may be uniform or non-uniform along the direction of the flow of exhaust gas. When the content of the oxygen storage material per unit volume in one or both of the first and second parts 100 and 200 is non-uniform, the content of the oxygen storage material per unit volume in this part may be varied stepwise or continuously along the direction of the flow of exhaust gas.

For example, a structure may be adopted in which the content of the oxygen storage material per unit volume in the first part 100 is uniform and the content of the oxygen storage material per unit volume in the second part 200 is varied stepwise or continuously along the direction of the flow of exhaust gas. Alternatively, a structure may be adopted in which the content of the oxygen storage material per unit volume in the first part 100 is varied stepwise or continuously along the direction of the flow of exhaust gas and the content of the oxygen storage material per unit volume in the second part 200 is uniform. Alternatively, a structure may be adopted in which the content of the oxygen storage material per unit volume in both the first and second parts 100 and 200 is varied stepwise or continuously along the direction of the flow of exhaust gas. The exhaust gas purification performance of the exhaust gas-purifying catalyst 1 and the amount of H₂S emitted from the exhaust gas-purifying catalyst 1 can be optimized by arbitrarily adopting such a structure.

The boundaries between the first part 100 and other parts and the boundaries between the second part 200 and other parts are defined, for example, as follows.

First, the exhaust gas-purifying catalyst 1 is divided into many parts adjacent to each other along the direction of the flow of exhaust gas. For example, the exhaust gas-purifying catalyst 1 is divided into two to ten equal parts. Next, the content of the oxygen storage material per unit volume in each of these parts is measured. Then, a position at which the content of the oxygen storage material per unit volume is equal to an average value Dₐᵥ of the above-measured values is defined as the position of the end surface of each of the first and second parts 100 and 200. Specifically, the part where the content of the oxygen storage material per unit volume is greater than or equal to the average value Dₐᵥ is defined as the first part 100 and the part where the content of the oxygen storage material per unit volume is less than the average value Dₐᵥ is defined as the second part 200.

In the case where plural parts at which the content of the oxygen storage material per unit volume is greater than or equal to the average value Dₐᵥ are present with parts at which the content of the oxygen storage material per unit volume is less than the average value Dₐᵥ interposed between these plural parts, only those positioned on the upstream side of parts having the oxygen content less than the average value Dₐᵥ among parts having the oxygen content greater than or equal to the average value Dₐᵥ are defined as the first part 100.

Further, in many cases, the content of the oxygen storage material per unit volume is not varied continuously but varied stepwise along the direction of the flow of exhaust gas. Though the above average value Dₐᵥ varies depending on the design of a product, this variation is not so large. Therefore, in many cases, the position of the boundary can be determined in the same manner as in the case of using the average value Dₐᵥ even if a specified standard value is determined in advance and this standard value is used in place of the above average value Dₐᵥ. As this standard value, for example, 0.15 mol/L is used.

As is clear from the above explanations, the exhaust gas-purifying catalyst 1 may contain other parts than the first and second parts 100 and 200. In this case, if the ratio of the sum of the areas occupied by the first and second parts 100 and 200 to the area of the exhaust gas-purifying catalyst 1 is small, the above effect may be deteriorated.

In this embodiment, the exhaust gas-purifying catalyst 1 may be produced, for example, by the following method.

First, a substrate 10 is prepared which is made of cordierite or the like and provided with one or more through-holes through which exhaust gas flows.

Next, a first slurry for forming the first part 100 is prepared. Specifically, a solution of a precious metal compound such as a platinum compound, a support such as cerium oxide, and optionally, a compound containing an acidic component and/or a binder are mixed to prepare a first slurry with a desired composition. Then, this first slurry is applied to the surface of the substrate 10 in a range of a fixed length from the upstream end of the substrate 10 and is then dried.

Then, a second slurry for forming the second part 200 is prepared. Specifically, a solution of a precious metal compound such as a platinum compound, a support such as alumina, and optionally, a compound containing an acidic component and/or a binder are mixed to prepare a second slurry having a desired composition. Here, when the second slurry contains an oxygen storage material, the ratio occupied by the oxygen storage material in a solid constituting the second slurry is designed to be smaller than that of a solid constituting the first slurry. Then, this second slurry is applied to the surface of the substrate 10 in a range of a fixed length from the downstream end of the substrate 10 and is then dried.

In succession, these coating layers are subjected to heat treatment. The exhaust gas-purifying catalyst 1 is thus obtained.

### EXAMPLE

In the following Examples only catalysts C30 and C31 are in accordance with the invention. The other catalysts, however, are left in the description for better understanding the invention.

First, catalysts C1 to C5 were produced in the following manner. Data related to these catalysts are collected in the following Tables 1 and 2.

**Table 1**

| Catalysts | Whole | First part / Whole | | | | | | | |
|---|---|---|---|---|---|---|---|---|---|
| | Surface Area (m²/L) | Slurry | Coating width (%) | Pt (×10⁻³mol/L) | Rh (×10⁻³mol/L) | Ceria (mol/L) | Zirconia (mol/L) | Alumina (mol/L) | Titania (mol/L) |
| C1 | 13000 | SA | 50 | 2.5 | 0.20 | 0.17 | 0.34 | 0.54 | - |
| | | | | 5.0 | 0.40 | 0.34 | 0.68 | 1.08 | |
| C2 | 7000 | SA | 50 | 2.5 | 0.20 | 0.17 | 0.34 | 0.54 | - |
| | | | | 5.0 | 0.40 | 0.34 | 0.68 | 1.08 | |
| C3 | 13500 | SA | 65 | 2.5 | 0.20 | 0.17 | 0.34 | 0.54 | - |
| | | | | 3.8 | 0.31 | 0.26 | 0.52 | 0.83 | |
| C4 | 13400 | SD | 65 | 2.5 | 0.20 | 0.17 | 0.34 | 0.54 | 0.13 |
| | | | | 3.8 | 0.31 | 0.26 | 0.52 | 0.83 | 0.2 |
| C5 (Comparative Example) | 20000 | SE | - | 3.0 | 1.2 | 0.23 | 0.40 | 1.6 | - |

**Table 2**

| Catalysts | Second Part | | | | | | | |
|---|---|---|---|---|---|---|---|---|
| | Slurry | Coating width (%) | Pt (×10⁻³mol/L) | Rh (×10⁻³mol/L) | Ceria (mol/L) | Zirconia (mol/L) | Alumina (mol/L) | Titania (mol/L) |
| C1 | SB | 50 | 0.50 | 1.0 | - | - | 0.68 | - |
| | | | 1.0 | 2.0 | | | 1.36 | |
| C2 | SB | 50 | 0.50 | 1.0 | - | **-** | 0.68 | - |
| | | | 1.0 | 2.0 | | | 1.36 | |
| C3 | SC | 35 | 0.50 | 1.0 | - | - | 0.68 | 0.16 |
| | | | 1.4 | 2.9 | | | 1.94 | 0.46 |
| C4 | SC | 35 | 0.50 | 1.0 | - | - | 0.68 | 0.16 |
| | | | 1.4 | 2.9 | | | 1.94 | 0.46 |
| C5 (Comparative Example) | - | - | - | - | - | - | - | - |

Data related to the whole of catalysts C1 to C5 and to each first part of catalysts C1 to C4 in Table 1. In Table 1, the surface area of each of catalysts C1 to C5 per unit volume is described in the column "Surface area". The types of slurries used to prepare each first part of catalysts C1 to C4 and catalyst C5 are described in the column "Slurry". The dimension of each first part of catalysts C1 to C4 in the direction of the flow of exhaust gas is described in terms of a ratio to the dimension of the substrate in the direction of the flow of the substrate in the column "Coating width". In each of other columns, the content of each component in the first parts of catalysts C1 to C4 or in catalyst C5 is described.

Data related to the second parts of catalysts C1 to C4 is summarized in Table 2. The meanings of each column in Table 2 are the same as those explained above in Table 1.

In Tables 1 and 2 and in the following tables, the content of each component of the catalyst per unit volume and the content of each component of the first or second part per unit volume are described together. The content of each component of the first part per unit volume can be calculated by dividing the content of each component of the catalyst per unit volume by the ratio of the dimension of the first part in the direction of the flow of exhaust gas to the dimension of the substrate in the direction of the flow. The content of each component of the second part per unit volume can be calculated by dividing the content of each component of the catalyst per unit volume by the ratio of the dimension of the second part in the direction of the flow of exhaust gas to the dimension of the substrate in the direction of the flow.

### <Example 1: Production of a catalyst C1>

First, a dinitrodiamine platinum nitric acid solution, a rhodium nitrate solution, a cerium oxide powder, a zirconium oxide powder, an alumina powder and an alumina sol were mixed to prepare a slurry. Hereinafter, this slurry is referred to as "slurry SA".

Next, a dinitrodiamine platinum nitric acid solution, a rhodium nitrate solution, an alumina powder and an alumina sol were mixed to prepare a slurry. Hereinafter, this slurry is referred to as "slurry SB".

Then, a monolith honeycomb support substrate made of cordierite was prepared and coated with slurry SA in a range from the upstream end to 50% of the length of the substrate, followed by drying. In succession, slurry SB was applied to the substrate in a range from the downstream end to 50% of the length of the substrate, followed by drying. Then, these coating layers were subjected to heat-treatment carried out at 500°C for one hour in an oxidizing atmosphere. Hereinafter, an exhaust gas-purifying catalyst obtained in this manner is referred to as "catalyst C1".

Each content of materials per unit volume of the catalyst in the first part which was a part corresponding to the coating layer formed using slurry SA among this catalyst C1 was as follows: platinum: 2.5 × 10⁻³ mol/L; rhodium: 0.20 × 10⁻³ mol/L; cerium oxide: 0.17 mol/L; zirconium oxide: 0.34 mol/L; and alumina: 0.54 mol/L.

Each content of materials per unit volume of the catalyst in the second part which was a part corresponding to the coating layer formed using slurry SB among this catalyst C1 was as follows: platinum: 0.50 × 10⁻³ mol/L; rhodium: 1.0 × 10⁻³ mol/L; and alumina: 0.68 mol/L.

The surface area of catalyst C1 per unit volume was 13000 m²/L.

### <Example 2: Production of a catalyst C2>

An exhaust gas-purifying catalyst having a surface area of 7000 m²/L per unit volume was manufactured in the same manner as in the production of catalyst C1 except that the powder having a smaller specific surface area was used as the powder contained in the slurries SA and SB. Hereinafter, this catalyst is referred to as "catalyst C2".

### <Example 3: Production of a catalyst C3>

First, a dinitrodiamine platinum nitric acid solution, a rhodium nitrate solution, a titania powder, an alumina powder and an alumina sol were mixed to prepare a slurry. Hereinafter, this slurry is referred to as "slurry SC".

Next, the same monolith honeycomb support substrate as used in Example 1 was prepared and coated with slurry SA in a range from the upstream end to 65% of the length of the substrate, followed by drying. In succession, slurry SC was applied to the substrate in a range from the downstream end to 35% of the length of the substrate, followed by drying. Then, these coating layers were subjected to the same heat-treatment as described for the catalyst C1. Hereinafter, an exhaust gas-purifying catalyst obtained in this manner is referred to as "catalyst C3".

Each content of materials per unit volume of the catalyst in the first part which was a part corresponding to the coating layer formed using slurry SA among this catalyst C3 was as follows: platinum: 2.5 × 10⁻³ mol/L; rhodium: 0.20 × 10⁻³ mol/L; cerium oxide: 0.17 mol/L; zirconium oxide: 0.34 mol/L; and alumina: 0.54 mol/L.

Each content of materials per unit volume of the catalyst in the second part which was a part corresponding to the coating layer formed using slurry SC among this catalyst C3 was as follows: platinum: 0.50 × 10⁻³ mol/L; rhodium: 1.0 × 10⁻³ mol/L; titania: 0.16 mol/L; and alumina: 0.68 mol/L.

The surface area of catalyst C3 per unit volume was 13500 m²/L.

### <Example 4: Production of a catalyst C4>

First, a dinitrodiamine platinum nitric acid solution, a rhodium nitrate solution, a cerium oxide powder, a zirconium oxide powder, a titania powder, an alumina powder and an alumina sol were mixed to prepare a slurry. Hereinafter, this slurry is referred to as "slurry SD".

Next, the same monolith honeycomb support substrate as used in Example 1 was prepared and coated with slurry SD in a range from the upstream end to 65% of the length of the substrate, followed by drying. In succession, slurry SC was applied to the substrate in a range from the downstream end to 35% of the length of the substrate, followed by drying. Then, these coating layers were subjected to the same heat-treatment as described for the catalyst C1. Hereinafter, an exhaust gas-purifying catalyst obtained in this manner is referred to as "catalyst C4".

Each content of materials per unit volume of the catalyst in the first part which was a part corresponding to the coating layer formed using slurry SD among this catalyst C4 was as follows: platinum: 2.5 × 10⁻³ mol/L; rhodium: 0.20 × 10⁻³ mol/L; cerium oxide: 0.17 mol/L; zirconium oxide: 0.34 mol/L; titania: 0.13 mol/L; and alumina: 0.54 mol/L.

Each content of materials per unit volume of the catalyst in the second part which was a part corresponding to the coating layer formed using slurry SC among this catalyst C4 was as follows: platinum: 0.50 × 10⁻³ mol/L; rhodium: 1.0 × 10⁻³ mol/L; titania: 0.16 mol/L; and alumina: 0.68 mol/L.

The surface area of catalyst C4 per unit volume was 13400 m²/L.

### <Example 5: Production of a catalyst C5>

First, a dinitrodiamine platinum nitric acid solution, a rhodium nitrate solution, a cerium oxide powder, a zirconium oxide powder, an alumina powder and an alumina sol were mixed to prepare a slurry. Hereinafter, this slurry is referred to as "slurry SE".

Next, the same monolith honeycomb support substrate as used in Example 1 was prepared and coated with slurry SE onto the whole substrate, followed by drying. Then, the coating layer was subjected to the same heat-treatment as described for the catalyst C1. Hereinafter, an exhaust gas-purifying catalyst obtained in this manner is referred to as "catalyst C5".

Each content of materials per unit volume of the catalyst C5 was as follows: platinum: 3.0 × 10⁻³ mol/L; rhodium: 1.2 × 10⁻³ mol/L; cerium oxide: 0.23 mol/L; zirconium oxide: 0.40 mol/L; and alumina: 1.6 mol/L. The surface area of catalyst C5 per unit volume was 20000 m²/L.

### <Measurement of the amount of H₂S to be emitted>

A start catalyst (SC) and catalyst C1 were disposed in this order in the exhaust system of a vehicle mounted with a straight-four 2.4-liter engine. Then, the operating condition of the vehicle was changed in the following manner while measuring the amount of H₂S to be emitted.

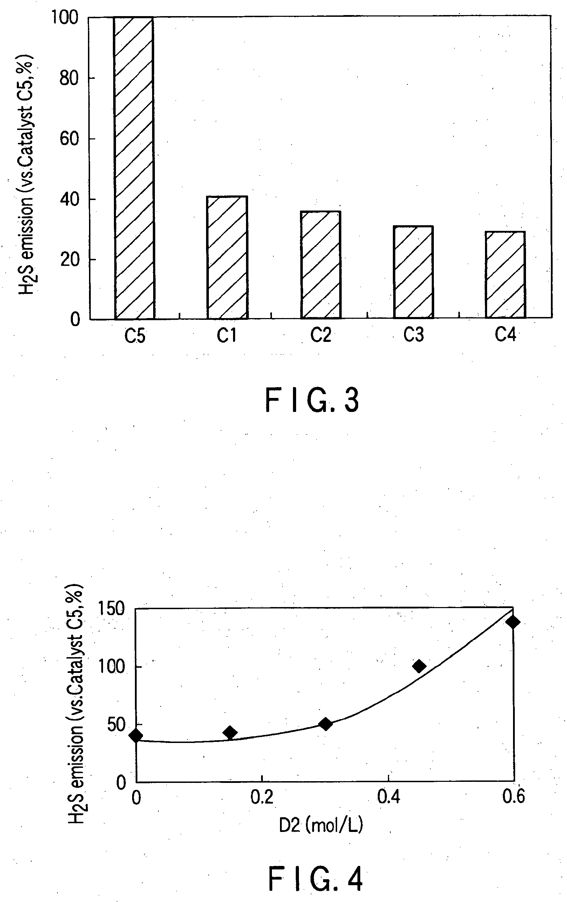

Specifically, first, this vehicle was made to run at a speed of 40 km/h for a fixed time to allow sulfur to be adsorbed to catalyst C1. Then, the vehicle was accelerated to 100 km/h at full throttle. Once the speed reached 100 km/h, the throttle was closed so the vehicle came to a halt and the engine was allowed to idle for a fixed time. The above measurement was also made for catalysts C2 to C5. The results are shown in FIG. 3.

FIG. 3 is a bar graph showing the amount of H₂S to be emitted. FIG. 3 shows a cumulative amount of H₂S emitted from each of catalysts C1 to C5 for 60 seconds after the vehicle halts, as a relative value when the value obtained using catalyst C5 is set to 100.

When each of catalysts C1 to C4 was used, as is clear from FIG. 3, the amount of H₂S to be emitted was reduced remarkably compared to the case of using catalyst C5. This reason is considered to be that the reduction in the content of the oxygen storage material in the second part of the catalyst causes a reduction in the amount of sulfur adsorbed to the second part of the catalyst.

Further, from the comparison between catalysts C1 and C2, it is suggested that the amount of H₂S to be emitted is reduced if the surface area per unit volume is reduced. Moreover, it is found from the comparison of catalysts C1 and C2 with catalysts C3 and C4 that the amount of H₂S to be emitted is more suppressed by making the catalyst layer contain titanium as an acidic component.

### Influence of content D2 of oxygen storage material in second part

The relation between the content D2 of the oxygen storage material per unit volume in the second part and the amount of H₂S to be emitted was examined.

Catalysts C6 to C10 were produced in the following manner. Data related to these catalysts is collected in the following Tables 3 and 4.

**Table 3**

| Catalysts | Whole | First part | | | | | | | |
|---|---|---|---|---|---|---|---|---|---|
| | Surface Area (m²/L) | Slurry | Coating width (%) | Pt (×10⁻³mol/L) | Rh (×10⁻³mol/L) | Ceria (mol/L) | Zirconia (mol/L) | Alumina (mol/L) | Titania (mol/L) |
| C6 | 13000 | SF | 50 | 2.5 | 0.20 | 0.3 | 0.42 | 0.54 | - |
| | | | | 5.0 | 0.40 | 0.6 | 0.84 | 1.08 | |
| C7 | 13000 | SF | 50 | 2.5 | 0.20 | 0.3 | 0.42 | 0.54 | - |
| | | | | 5.0 | 0.40 | 0.6 | 0.84 | 1.08 | |
| C8 | 13000 | SF | 50 | 2.5 | 0.20 | 0.3 | 0.42 | 0.54 | - |
| | | | | 5.0 | 0.40 | 0.6 | 0.84 | 1.08 | |
| C9 | 13000 | SF | 50 | 2.5 | 0.20 | 0.3 | 0.42 | 0.54 | - |
| | | | | 5.0 | 0.40 | '0.6 | 0.84 | 1.08 | |
| C10 (Comparative Example) | 13000 | SF | 50 | 2.5 | 0.20 | 0.3 | 0.42 | 0.54 | - |
| | | | | 5.0 | 0.40 | 0.6 | 0.84 | 1.08 | |

**Table 4**

| Catalysts | Second Part | | | | | | | |
|---|---|---|---|---|---|---|---|---|
| | Slurry | Coating width (%) | Pt (×10⁻³mol/L) | Rh (×10⁻³mol/L) | Ceria (mol/L) | Zirconia (mol/L) | Alumina (mol/L) | Titania (mol/L) |
| C6 | SG | 50 | 0.50 | 1.0 | - | - | 0.68 | - |
| | | | 1.0 | 2.0 | | | 1.36 | |
| C7 | SH | 50 | 0.50 | 1.0 | 0.075 | 0.105 | 0.60 | - |
| | | | 1.0 | 2.0 | 0.15 | 0.21 | 1.20 | |
| C8 | SI | 50 | 0.50 | 1.0 | 0.15 | 0.21 | 0.52 | - |
| | | | 1.0 | 2.0 | 0.3 | 0.42 | 1.04 | |
| C9 | SJ | 50 | 0.50 | 1.0 | 0.225 | 0.315 | 0.44 | - |
| | | | 1.0 | 2.0 | 0.45 | 0.63 | 0.88 | |
| C10 (Comparative Example) | SK | 50 | 0.50 | 1.0 | 0.3 | 0.42 | 0.36 | - |
| | | | 1.0 | 2.0 | 0.6 | 0.84 | 0.72 | |

Data related to the whole and first part of each of catalysts C6 to C10 is summarized in Table 3. Data related to the second part of each of catalysts C6 to C10 is summarized in Table 4.

### <Example 6: Production of a catalyst C6>

First, a dinitrodiamine platinum nitric acid solution, a rhodium nitrate solution, a cerium oxide powder, a zirconium oxide powder, an alumina powder and an alumina sol were mixed to prepare a slurry. Hereinafter, this slurry is referred to as "slurry SF".

Next, a dinitrodiamine platinum nitric acid solution, a rhodium nitrate solution, an alumina powder and an alumina sol were mixed to prepare a slurry. Hereinafter, this slurry is referred to as "slurry SG".

Then, the same monolith honeycomb support substrate as used in Example 1 was prepared and coated with slurry SF in a range from the upstream end to 50% of the length of the substrate, followed by drying. In succession, slurry SG was applied to the substrate in a range from the downstream end to 50% of the length of the substrate, followed by drying. Then, these coating layers were subjected to the same heat-treatment as described for the catalyst C1. Hereinafter, an exhaust gas-purifying catalyst obtained in this manner is referred to as "catalyst C6".

Each content of materials per unit volume of the catalyst in the first part which was a part corresponding to the coating layer formed using slurry SF among this catalyst C6 was as follows: platinum: 2.5 × 10⁻³ mol/L; rhodium: 0.20 × 10⁻³ mol/L; cerium oxide: 0.3 mol/L; zirconium oxide: 0.42 mol/L; and alumina: 0.54 mol/L.

Each content of materials per unit volume of the catalyst in the second part which was a part corresponding to the coating layer formed using slurry SG among this catalyst C6 was as follows: platinum: 0.50 × 10⁻³ mol/L; rhodium: 1.0 × 10⁻³ mol/L; cerium: 0 mol/L; and alumina: 0.68 mol/L.

The surface area of catalyst C6 per unit volume was 13000 m²/L. The content D1 of the oxygen storage material of the first part per unit volume was 0.6 mol/L. The content D2 of the oxygen storage material of the second part per unit volume was 0 mol/L. The ratio of D2 to D1 was 0.

### <Example 7: Production of a catalyst C7>

First, a dinitrodiamine platinum nitric acid solution, a rhodium nitrate solution, a cerium oxide powder, a zirconium oxide powder, an alumina powder and an alumina sol were mixed to prepare a slurry. Hereinafter, this slurry is referred to as "slurry SH".

An exhaust gas-purifying catalyst was manufactured in the same manner as the above-explained catalyst C6 except that slurry SH was used in place of slurry SG. Hereinafter, this catalyst is referred to as "catalyst C7".

Each content of materials per unit volume of the catalyst in the first part which was a part corresponding to the coating layer formed using slurry SF among this catalyst C7 was as follows: platinum: 2.5 × 10⁻³ mol/L; rhodium: 0.20 × 10⁻³ mol/L; cerium oxide: 0.3 mol/L; zirconium oxide: 0.42 mol/L; and alumina: 0.54 mol/L.

Each content of materials per unit volume of the catalyst in the second part which was a part corresponding to the coating layer formed using slurry SH among this catalyst C7 was as follows: platinum: 0.50 × 10⁻³ mol/L; rhodium: 1.0 × 10⁻³ mol/L; cerium oxide: 0.075 mol/L; zirconium oxide: 0.105 mol/L; and alumina: 0.60 mol/L.

The surface area of catalyst C7 per unit volume was 13000 m²/L. The content D1 of the oxygen storage material of the first part per unit volume was 0.6 mol/L. The content D2 of the oxygen storage material of the second part per unit volume was 0.15 mol/L. The ratio of D2 to D1 was 0.25.

### <Example 8: Production of a catalyst C8>

A slurry was prepared in the same manner as slurry SH except that the contents of the cerium oxide powder and zirconium oxide powder were increased and the content of alumina was decreased. Hereinafter, this slurry is referred to as "slurry SI".

An exhaust gas-purifying catalyst was manufactured in the same manner as the above-explained catalyst C7 except that slurry SI was used in place of slurry SH. Hereinafter, this catalyst is referred to as "catalyst C8".

Each content of materials per unit volume of the catalyst in the first part which was a part corresponding to the coating layer formed using slurry SF among this catalyst C8 was as follows: platinum: 2.5 × 10⁻³ mol/L; rhodium: 0.20 × 10⁻³ mol/L; cerium oxide: 0.3 mol/L; zirconium oxide: 0.42 mol/L; and alumina: 0.54 mol/L.

Each content of materials per unit volume of the catalyst in the second part which was a part corresponding to the coating layer formed using slurry SI among this catalyst C8 was as follows: platinum: 0.50 × 10⁻³ mol/L; rhodium: 1.0 × 10⁻³ mol/L; cerium oxide: 0.15 mol/L; zirconium oxide: 0.21 mol/L; and alumina: 0.52 mol/L.

The surface area of catalyst C8 per unit volume was 13000 m²/L. The content D1 of the oxygen storage material of the first part per unit volume was 0.6 mol/L. The content D2 of the oxygen storage material of the second part per unit volume was 0.3 mol/L. The ratio of D2 to D1 was 0.5.

### <Example 9: Production of a catalyst C9>

A slurry was prepared in the same manner as slurry SI except that the contents of the cerium oxide powder and zirconium oxide powder were increased and the content of alumina was decreased. Hereinafter, this slurry is referred to as "slurry SJ".

An exhaust gas-purifying catalyst was manufactured in the same manner as the above-explained catalyst C7 except that slurry SJ was used in place of slurry SH. Hereinafter, this catalyst is referred to as "catalyst C9".

Each content of materials per unit volume of the catalyst in the first part which was a part corresponding to the coating layer formed using slurry SF among this catalyst C9 was as follows: platinum: 2.5 × 10⁻³ mol/L; rhodium: 0.20 × 10⁻³ mol/L; cerium oxide: 0.3 mol/L; zirconium oxide: 0.42 mol/L; and alumina: 0.54 mol/L.

Each content of materials per unit volume of the catalyst in the second part which was a part corresponding to the coating layer formed using slurry SJ among this catalyst C9 was as follows: platinum: 0.50 × 10⁻³ mol/L; rhodium: 1.0 × 10⁻³ mol/L; cerium oxide: 0.225 mol/L; zirconium oxide: 0.315 mol/L; and alumina: 0.44 mol/L.

The surface area of catalyst C9 per unit volume was 13000 m²/L. The content D1 of the oxygen storage material of the first part per unit volume was 0.6 mol/L. The content D2 of the oxygen storage material of the second part per unit volume was 0.45 mol/L. The ratio of D2 to D1 was 0.75.

### <Example 10: Production of a catalyst C10>

A slurry was prepared in the same manner as slurry SJ except that the contents of the cerium oxide powder and zirconium oxide powder were increased and the content of alumina was decreased. Hereinafter, this slurry is referred to as "slurry SK".

An exhaust gas-purifying catalyst was manufactured in the same manner as the above-explained catalyst C7 except that slurry SK was used in place of slurry SH. Hereinafter, this catalyst is referred to as "catalyst C10".

Each content of materials per unit volume of the catalyst in the first part which was a part corresponding to the coating layer formed using slurry SF among this catalyst C10 was as follows: platinum: 2.5 × 10⁻³ mol/L; rhodium: 0.20 × 10⁻³ mol/L; cerium oxide: 0.3 mol/L; zirconium oxide: 0.42 mol/L; and alumina: 0.54 mol/L.

Each content of materials per unit volume of the catalyst in the second part which was a part corresponding to the coating layer formed using slurry SK among this catalyst C10 was as follows: platinum: 0.50 × 10⁻³ mol/L; rhodium: 1.0 × 10⁻³ mol/L; cerium oxide: 0.3 mol/L; zirconium oxide: 0.42 mol/L; and alumina: 0.36 mol/L.

The surface area of catalyst C10 per unit volume was 13000 m²/L. The content D1 of the oxygen storage material of the first part per unit volume was 0.6 mol/L. The content D2 of the oxygen storage material of the second part per unit volume was 0.6 mol/L. The ratio of D2 to D1 was 1.

### <Measurement of the amount of H₂S to be emitted>

With regard to each of these catalysts C6 to C10, the amount of H₂S to be emitted was measured in the same method as mentioned above. The results are shown in FIG. 4.

FIG. 4 is a graph showing the relation between the content D2 of the oxygen storage material per unit volume in the second part and the amount of H₂S to be emitted.

As is found from FIG. 4, the amount of H₂S to be emitted can be suppressed more significantly than in the case of using catalyst C5 by reducing the above D2 to 0.3 mol/L or less. In other words, it is found that the amount of H₂S to be emitted is remarkably reduced by reducing the ratio D2/D1 to 0.5 or less.

### <<Influence of each coating width of first part and second part>>

The relation between each coating width of the first and second parts and the amount of H₂S to be emitted or the amount of NOₓ to be emitted was examined.

Catalysts C11 to C16 were produced in the following manner. Data related to these catalysts is collected in Tables 5 and 6.

**Table 5**

| Catalysts | Whole | First part | | | | | | | |
|---|---|---|---|---|---|---|---|---|---|
| | Surface Area (m²/L) | Slurry | Coating width (%) | Pt (×10⁻³mol/L) | Rh (×10⁻³mol/L) | Ceria (mol/L) | Zirconia (mol/L) | Alumina (mol/L) | Titania (mol/L) |
| C11 | 13000 | SF | 90 | 2.5 | 0.20 | 0.3 | 0.42 | 0.54 | - |
| | | | | 2.8 | 0.22 | 0.33 | 0.47 | 0.60 | |
| C12 | 13000 | SF | 85 | 2.5 | 0.20 | 0.3 | 0.42 | 0.54 | - |
| | | | | 2.9 | 0.24 | 0.35 | 0.49 | 0. 64 | |
| C13 | 13000 | SF | 75 | 2.5 | 0.20 | 0.3 | 0.42 | 0.54 | - |
| | | | | 3.3 | 0.27 | 0.40 | 0.56 | 0.72 | |
| C14 | 13000 | SF | 25 | 2.5 | 0.20 | 0.3 | 0.42 | 0.54 | - |
| | | | | 10 | 0.80 | 1.20 | 1.68 | 2.16 | |
| C15 | 13000 | SF | 15 | 2.5 | 0.20 | 0.3 | 0.42 | 0.54 | - |
| | | | | 16.7 | 1.33 | 2.00 | 2.80 | 3.60 | |
| C16 | 13000 | SF | 10 | 2.5 | 0.20 | 0.3 | 0.42 | 0.54 | - |
| | | | | 25 | 2.0 | 3.00 | 4.20 | 5.4 | |

**Table 6**

| Catalysts | Second Part | | | | | | | |
|---|---|---|---|---|---|---|---|---|
| | Slurry | Coating width (%) | Pt (×10⁻³mol/L) | Rh (×10⁻³mol/L) | Ceria (mol/L) | Zirconia (mol/L) | Alumina (mol/L) | Titania (mol/L) |
| C11 | SG | 10 | 0.50 | 1.0 | - | - | 0.68 | - |
| | | | 5.00 | 10.0 | | | 6.80 | |
| C12 | SG | 15 | 0.50 | 1.0 | - | - | 0.68 | - |
| | | | 3.33 | 6.7 | | | 4.53 | |
| C13 | SG | 25 | 0.50 | 1.0 | - | - | 0.68 | - |
| | | | 2.00 | 4.0 | | | 2.72 | |
| C14 | SG | 75 | 0.50 | 1.0 | - | - | 0.68 | - |
| | | | 0.67 | 1.3 | | | 0.91 | |
| C15 | SG | 85 | 0.50 | 1.0 | - | - | 0.68 | - |
| | | | 0.59 | 1.2 | | | 0.80 | |
| C16 | SG | 90 | 0.50 | 1.0 | - | - | 0.68 | - |
| | | | 0.56 | 1.1 | | | 0.76 | |

Data related to the whole and first part of each of catalysts C11 to C16 is summarized in Table 5. Data related to the second part of each of catalysts C11 to C16 is summarized in Table 6.

### <Example 11: Production of a catalyst C11>

An exhaust gas-purifying catalyst was produced in the same manner as catalyst C6 except that slurry SF was applied to the substrate in a range from the upstream end to 90% of the length of the substrate instead of applying slurry SF to the substrate in a range from the upstream end to 50% of the length of the substrate, and slurry SG was applied to the substrate in a range from the downstream end to 10% of the length of the substrate instead of applying slurry SG to the substrate in a range from the downstream end to 50% of the length of the substrate. Hereinafter, this catalyst is referred to as "catalyst C11".

The content D1 of the oxygen storage material per unit volume of the first part corresponding to the coating layer formed using slurry SF among this catalyst C11 was 0.33 mol/L. On the other hand, the content D2 of the oxygen storage material per unit volume of the second part corresponding to the coating layer formed using slurry SG among this catalyst C11 was 0 mol/L. Further, the surface area of catalyst C11 per unit volume was 13000 m²/L.

### <Example 12: Production of a catalyst C12>

An exhaust gas-purifying catalyst was produced in the same manner as catalyst C6 except that slurry SF was applied to the substrate in a range from the upstream end to 85% of the length of the substrate instead of applying slurry SF to the substrate in a range from the upstream end to 50% of the length of the substrate, and slurry SG was applied to the substrate in a range from the downstream end to 15% of the length of the substrate instead of applying slurry SG to the substrate in a range from the downstream end to 50% of the length of the substrate. Hereinafter, this catalyst is referred to as "catalyst C12".

The content D1 of the oxygen storage material per unit volume of the first part corresponding to the coating layer formed using slurry SF among this catalyst C12 was 0.35 mol/L. On the other hand, the content D2 of the oxygen storage material per unit volume of the second part corresponding to the coating layer formed using slurry SG among this catalyst C12 was 0 mol/L. Further, the surface area of catalyst C12 per unit volume was 13000 m²/L.

### <Example 13: Production of a catalyst C13>

An exhaust gas-purifying catalyst was produced in the same manner as catalyst C6 except that slurry SF was applied to the substrate in a range from the upstream end to 75% of the length of the substrate instead of applying slurry SF to the substrate in a range from the upstream end to 50% of the length of the substrate, and slurry SG was applied to the substrate in a range from the downstream end to 25% of the length of the substrate instead of applying slurry SG to the substrate in a range from the downstream end to 50% of the length of the substrate. Hereinafter, this catalyst is referred to as "catalyst C13".

The content D1 of the oxygen storage material per unit volume of the first part corresponding to the coating layer formed using slurry SF among this catalyst C13 was 0.40 mol/L. On the other hand, the content D2 of the oxygen storage material per unit volume of the second part corresponding to the coating layer formed using slurry SG among this catalyst C13 was 0 mol/L. Further, the surface area of catalyst C13 per unit volume was 13000 m²/L.

### <Example 14: Production of a catalyst C14>

An exhaust gas-purifying catalyst was produced in the same manner as catalyst C6 except that slurry SF was applied to the substrate in a range from the upstream end to 25% of the length of the substrate instead of applying slurry SF to the substrate in a range from the upstream end to 50% of the length of the substrate, and slurry SG was applied to the substrate in a range from the downstream end to 75% of the length of the substrate instead of applying slurry SG to the substrate in a range from the downstream end to 50% of the length of the substrate. Hereinafter, this catalyst is referred to as "catalyst C14".

The content D1 of the oxygen storage material per unit volume of the first part corresponding to the coating layer formed using slurry SF among this catalyst C14 was 1.2 mol/L. On the other hand, the content D2 of the oxygen storage material per unit volume of the second part corresponding to the coating layer formed using slurry SG among this catalyst C14 was 0 mol/L. Further, the surface area of catalyst C14 per unit volume was 13000 m²/L.

### <Example 15: Production of a catalyst C15>

An exhaust gas-purifying catalyst was produced in the same manner as catalyst C6 except that slurry SF was applied to the substrate in a range from the upstream end to 15% of the length of the substrate instead of applying slurry SF to the substrate in a range from the upstream end to 50% of the length of the substrate, and slurry SG was applied to the substrate in a range from the downstream end to 85% of the length of the substrate instead of applying slurry SG to the substrate in a range from the downstream end to 50% of the length of the substrate. Hereinafter, this catalyst is referred to as "catalyst C15".

The content D1 of the oxygen storage material per unit volume of the first part corresponding to the coating layer formed using slurry SF among this catalyst C15 was 2.0 mol/L. On the other hand, the content D2 of the oxygen storage material per unit volume of the second part corresponding to the coating layer formed using slurry SG among this catalyst C15 was 0 mol/L. Further, the surface area of catalyst C15 per unit volume was 13000 m²/L.

### <Example 16: Production of a catalyst C16>

An exhaust gas-purifying catalyst was produced in the same manner as catalyst C6 except that slurry SF was applied to the substrate in a range from the upstream end to 10% of the length of the substrate instead of applying slurry SF to the substrate in a range from the upstream end to 50% of the length of the substrate, and slurry SG was applied to the substrate in a range from the downstream end to 90% of the length of the substrate instead of applying slurry SG to the substrate in a range from the downstream end to 50% of the length of the substrate. Hereinafter, this catalyst is referred to as "catalyst C16".

The content D1 of the oxygen storage material per unit volume of the first part corresponding to the coating layer formed using slurry SF among this catalyst C16 was 3.0 mol/L. On the other hand, the content D2 of the oxygen storage material per unit volume of the second part corresponding to the coating layer formed using slurry SG among this catalyst C16 was 0 mol/L. Further, the surface area of catalyst C16 per unit volume was 13000 m²/L.

### <Measurement of the amount of H₂S to be emitted and the amount of NOₓ to be emitted>

With regard to catalysts C6 and C11 to C16, the amount of H₂S to be emitted was measured in the same method as mentioned above.

Further, a durable test of each of these catalysts was performed at 950°C for 50 hours by using a 4.3-liter engine. After that, each of these catalysts was set to a vehicle mounted with a straight-four 2.4-liter engine. Then, this vehicle was made to run according to the LA #4 (hot) mode to measure the amount of NOₓ to be emitted.

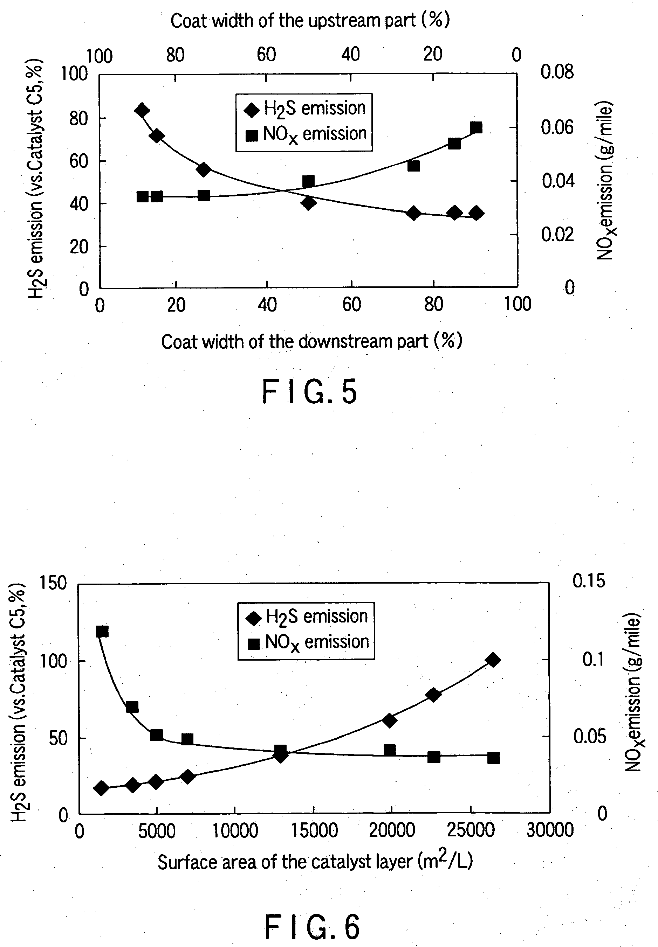

FIG. 5 is a graph showing the relation between the coating widths of the first and second parts and the amounts of H₂S and NOₓ to be emitted.

As shown in FIG. 5, the amount of H₂S to be emitted is reduced when the coating width of the second part is increased. This reason is inferred to be that the adsorption of sulfur to the catalyst layer is more suppressed with increase in the coating width of the second part which is low in the content of the oxygen storage material. On the contrary, when the coating width of the second part is decreased, the amount of NOₓ to be emitted is reduced. This reason is inferred to be that the oxygen storage ability of the catalyst layer is more improved with increase in the coating width of the first part which is high in the content of the oxygen storage material.

These results show that reductions both in the amount of H₂S to be emitted and in the amount of NOₓ to be emitted can be accomplished at the same time by designing the coating width of the second part to be within a range of 15 to 85% of the length of the substrate from the downstream end of the substrate. «Influence of surface area of catalyst per unit volume»

The relation between the surface area of the exhaust gas-purifying catalyst per unit volume and the amount of H₂S to be emitted or the amount of NOₓ to be emitted was examined.

Catalysts C17 to C23 were produced in the following manner. Data related to these catalysts is collected in Tables 7 and 8.

**Table 7**

| Catalysts | Whole | First part | | | | | | | |
|---|---|---|---|---|---|---|---|---|---|
| | Surface Area (m²/L) | Slurry | Coating width (%) | Pt (×10⁻³mol/L) | Rh (×10⁻³mol/L) | Ceria (mol/L) | Zirconia (mol/L) | Alumina (mol/L) | Titania (mol/L) |
| C17 | 1400 | SF | 50 | 2.5 | 0.20 | 0.3 | 0.42 | 0.54 | - |
| | | | | 5.0 | 0.40 | 0.6 | 0.84 | 1.08 | |
| C18 | 3400 | SF | 50 | 2.5 | 0.20 | 0.3 | 0.42 | 0.54 | - |
| | | | | 5.0 | 0.40 | 0.6 | 0.84 | 1.08 | |
| C19 | 5000 | SF | 50 | 2.5 | 0.20 | 0.3 | 0.42 | 0.54 | - |
| | | | | 5.0 | 0.40 | 0.6 | 0.84 | 1.08 | |
| C20 | 6800 | SF | 50 | 2.5 | 0.20 | 0.3 | 0.42 | 0.54 | - |
| | | | | 5.0 | 0.40 | 0.6 | 0.84 | 1.08 | |
| C21 | 20000 | SF | 50 | 2.5 | 0.20 | 0.3 | 0.42 | 0.54 | - |
| | | | | 5.0 | 0.40 | 0.6 | 0.84 | 1.08 | |
| C22 | 23000 | SF | 50 | 2.5 | 0.20 | 0.3 | 0.42 | 0.54 | - |
| | | | | 5.0 | 0.40 | 0.6 | 0.84 | 1.08 | |
| C23 | 26000 | SF | 50 | 2.5 | 0.20 | 0.3 | 0.42 | 0.54 | - |
| | | | | 5.0 | 0.40 | 0.6 | 0.84 | 1.08 | |

**Table 8**

| Catalysts | Second Part | | | | | | | |
|---|---|---|---|---|---|---|---|---|
| | Slurry | Coating width (%) | Pt (×10⁻³mol/L) | Rh (×10⁻³mol/L) | Ceria (mol/L) | Zirconia (mol/L) | Alumina (mol/L) | Titania (mol/L) |
| C17 | SG | 50 | 0.50 | 1.0 | - | - | 0.68 | - |
| | | | 1.00 | 2.0 | | | 1.36 | |
| C18 | SG | 50 | 0.50 | 1.0 | - | - | 0.68 | - |
| | | | 1.00 | 2.0 | | | 1.36 | |
| C19 | SG | 50 | 0.50 | 1.0 | - | - | 0.68 | - |
| | | | 1.00 | 2.0 | | | 1.36 | |
| C20 | SG | 50 | 0.50 | 1.0 | - | - | 0.68 | - |
| | | | 1.00 | 2.0 | | | 1.36 | |
| C21 | SG | 50 | 0.50 | 1.0 | - | - | 0.68 | - |
| | | | 1.00 | 2.0 | | | 1.36 | |
| C22 | SG | 50 | 0.50 | 1.0 | - | - | 0.68 | - |
| | | | 1.00 | 2.0 | | | 1.36 | |
| C23 | SG | 50 | 0.50 | 1.0 | - | - | 0.68 | - |
| | | | 1.00 | 2.0 | | | 1.36 | |

Data related to the whole and first part of each of catalysts C17 to C23 is summarized in Table 7. Data related to the second part of each of catalysts C17 to C23 is summarized in Table 8.

### <Example 17: Production of a catalyst C17>

An exhaust gas-purifying catalyst having a surface area of 1400 m²/L per unit volume was produced in the same manner as the abovementioned catalyst C6 except that a powder having a smaller specific surface area was used as the powder contained in the slurries SF and SG. Hereinafter, this catalyst is referred to as "catalyst C17".

### <Example 18: Production of a catalyst C18>

An exhaust gas-purifying catalyst having a surface area of 3400 m²/L per unit volume was produced in the same manner as the abovementioned catalyst C6 except that a powder having a smaller specific surface area was used as the powder contained in the slurries SF and SG. Hereinafter, this catalyst is referred to as "catalyst C18".

### <Example 19: Production of a catalyst C19>

An exhaust gas-purifying catalyst having a surface area of 5000 m²/L per unit volume was produced in the same manner as the abovementioned catalyst C6 except that a powder having a smaller specific surface area was used as the powder contained in the slurries SF and SG. Hereinafter, this catalyst is referred to as "catalyst C19".

### <Example 20: Production of a catalyst C20>

An exhaust gas-purifying catalyst having a surface area of 6800 m²/L per unit volume was produced in the same manner as the abovementioned catalyst C6 except that a powder having a smaller specific surface area was used as the powder contained in the slurries SF and SG. Hereinafter, this catalyst is referred to as "catalyst C20".

### <Example 21: Production of a catalyst C21>

An exhaust gas-purifying catalyst having a surface area of 20000 m²/L per unit volume was produced in the same manner as the abovementioned catalyst C6 except that a powder having a larger specific surface area was used as the powder contained in the slurries SF and SG. Hereinafter, this catalyst is referred to as

### "catalyst C21".

### <Example 22: Production of a catalyst C22>

An exhaust gas-purifying catalyst having a surface area of 23000 m²/L per unit volume was produced in the same manner as the abovementioned catalyst C6 except that a powder having a larger specific surface area was used as the powder contained in the slurries SF and SG. Hereinafter, this catalyst is referred to as

### "catalyst C22".

### <Example 23: Production of a catalyst C23>

An exhaust gas-purifying catalyst having a surface area of 26000 m²/L per unit volume was produced in the same manner as the abovementioned catalyst C6 except that a powder having a larger specific surface area was used as the powder contained in the slurries SF and SG. Hereinafter, this catalyst is referred to as "catalyst C23".

### <Measurement of the amount of H₂S to be emitted and the amount of NOₓ to be emitted>

With regard to catalysts C6 and C17 to C23, the amount of H₂S and NOₓ to be emitted was measured in the same method as mentioned above.

FIG. 6 is a graph showing the relation between the surface area of the catalyst per unit volume and the amount of H₂S and NOₓ to be emitted.

It is found from FIG. 6 that the amount of H₂S to be emitted is reduced with decrease in the surface area per unit volume whereas the amount of NOₓ to be emitted is reduced with increase in the surface area per unit volume. In particular, it is found that when the surface area per unit volume is designed to be, for example, in a range of 5000 to 23000 m²/L, a reduction in the amount of H₂S to be emitted and a reduction in the amount of NOₓ to be emitted can be both attained at the same time. It is also found that when the surface area per unit volume is designed to be in a range of 5000 to 16000 m²/L, especially excellent performance is exhibited..

### <<Influence of surface area of second part per unit volume>>

The relation between the surface area of the second part of the exhaust gas-purifying catalyst per unit volume and the amount of H₂S to be emitted or the amount of NOₓ to be emitted was examined.

Catalysts C24 to C28 were produced in the following manner. Data related to these catalysts is collected in Tables 9 and 10.

**Table 9**

| Catalysts | First part | | | | | | | |
|---|---|---|---|---|---|---|---|---|
| | Slurry | Coating width (%) | Pt (×10⁻³mol/L) | Rh (×10⁻³mol/L) | Ceria (mol/L) | Zirconia (mol/L) | Alumina (mol/L) | Titania (mol/L) |
| C24 | SA | 50 | 2.5 | 0.20 | 0.17 | 0.34 | 0.54 | - |
| | | | 5.0 | 0.40 | 0.34 | 0.68 | 1.08 | |
| C25 | SA | 50 | 2.5 | 0.20 | 0.17 | 0.34 | 0.54 | - |
| | | | 5.0 | 0.40 | 0.34 | 0.68 | 1.08 | |
| C26 | SA | 50 | 2.5 | 0.20 | 0.17 | 0.34 | 0.54 | - |
| | | | 5.0 | 0.40 | 0.34 | 0.68 | 1.08 | |
| C27 | SA | 50 | 2.5 | 0.20 | 0.17 | 0.34 | 0.54 | - |
| | | | 5.0 | 0.40 | 0.34 | 0.68 | 1.08 | |
| C28 | SA | 50 | 2.5 | 0.20 | 0.17 | 0.34 | 0.54 | - |
| | | | 5.0 | 0.40 | 0.34 | 0.68 | 1.08 | |

**Table 10**

| Catalysts | Second Part | | | | | | | | |
|---|---|---|---|---|---|---|---|---|---|
| | Surface Area (m²/L) | Slurry | Coating width (%) | Pt (×10⁻³mol/L) | Rh (×10⁻³mol/L) | Ceria (mol/L) | Zirconia (mol/L) | Alumina (mol/L) | Titania (mol/L) |
| C24 | 13000 | SB | 50 | 0.50 | 1.0 | - | - | 0.68 | - |
| | | | | 1.00 | 2.0 | | | 1.36 | |
| C25 | 10000 | SB | 50 | 0.50 | 1.0 | - | - | 0.68 | - |
| | | | | 1.00 | 2.0 | | | 1.36 | |
| C26 | 7500 | SB | 50 | 0.50 | 1.0 | - | - | 0.68 | - |
| | | | | 1.00 | 2.0 | | | 1.36 | |
| C27 | 5000 | SB | 50 | 0.50 | 1.0 | - | - | 0.68 | - |
| | | | | 1.00 | 2.0 | | | 1.36 | |
| C28 | 4000 | SB | 50 | 0.50 | 1.0 | - | - | 0.68 | - |
| | | | | 1.00 | 2.0 | | | 1.36 | |

Data related to the first part of each of catalysts C24 to C28 is summarized in Table 9. Data related to the second part of each of catalysts C24 to C28 is summarized in Table 10. The surface area of the second part per unit volume is described in the column "Surface area" of Table 10.

### <Example 24: Production of a catalyst C24>

An exhaust gas-purifying catalyst provided with the second part having a surface area of 13000 m²/L per unit volume was produced in the same manner as the aforementioned catalyst C1 except that the specific surface area of the powder contained in slurry SB was changed. Hereinafter, this catalyst is referred to as "catalyst C24".

### <Example 25: Production of a catalyst C25>

An exhaust gas-purifying catalyst provided with the second part having a surface area of 10000 m²/L per unit volume was produced in the same manner as the aforementioned catalyst C1 except that the specific surface area of the powder contained in slurry SB was changed. Hereinafter, this catalyst is referred to as "catalyst C25".

### <Example 26: Production of a catalyst C26>

An exhaust gas-purifying catalyst provided with the second part having a surface area of 7500 m²/L per unit volume was produced in the same manner as the aforementioned catalyst C1 except that the specific surface area of the powder contained in slurry SB was changed. Hereinafter, this catalyst is referred to as "catalyst C26".

### <Example 27: Production of a catalyst C27>

An exhaust gas-purifying catalyst provided with the second part having a surface area of 5000 m²/L per unit volume was produced in the same manner as the aforementioned catalyst C1 except that the specific surface area of the powder contained in slurry SB was changed. Hereinafter, this catalyst is referred to as "catalyst C27".

### <Example 28: Production of a catalyst C28>

An exhaust gas-purifying catalyst provided with the second part having a surface area of 4000 m²/L per unit volume was produced in the same manner as the aforementioned catalyst C1 except that the specific surface area of the powder contained in slurry SB was changed. Hereinafter, this catalyst is referred to as "catalyst C28".

### <Measurement of the amount of H₂S to be emitted and the amount of NOₓ to be emitted>

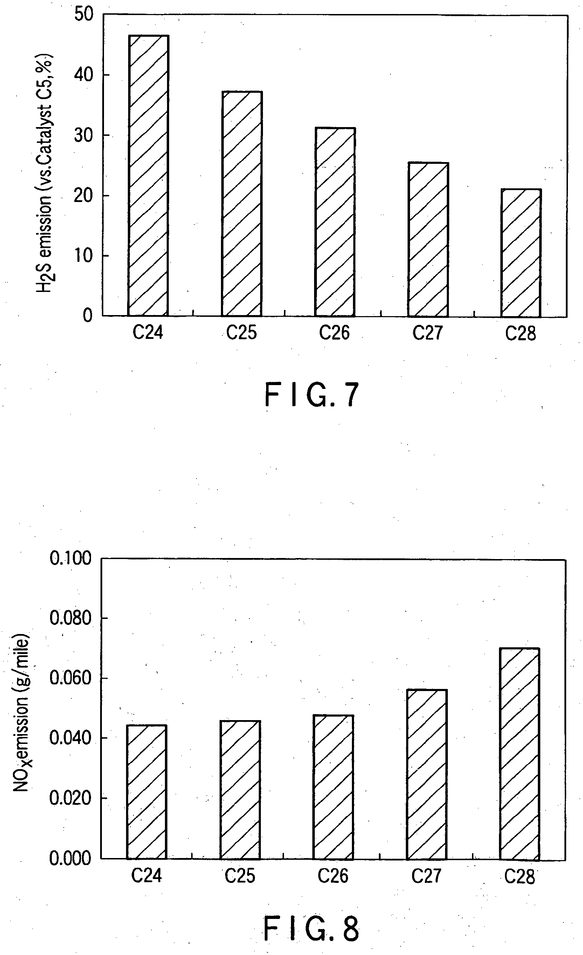

With regard to catalysts C24 to C28, the amount of H₂S and NOₓ to be emitted was measured in the same method as mentioned above. The results are shown in the following Table 11 and FIG. 7 and FIG. 8.

**Table 11**

| Catalysts | surface area of the second part (m²/L) | Amounts of H₂S emitted (vs.C5,%) | Amounts of NOx emitted (g/mile) |
|---|---|---|---|
| C24 | 13000 | 47 | 0.044 |
| C25 | 10000 | 37 | 0.045 |
| C26 | 7500 | 31 | 0.047 |
| C27 | 5000 | 25 | 0.056 |
| C28 | 4000 | 21 | 0.070 |

The surface area of the second part per unit volume in each of catalysts C24 to C28 and the amounts of H₂S and NOₓ to be emitted in the case of using these catalysts are summarized in Table 11.

FIG. 7 is a bar graph showing the amount of H₂S to be emitted. FIG. 8 is a bar graph showing the amount of NOₓ to be emitted. FIG. 7 and FIG. 8 each show the relation between the surface area of the second part of the catalyst per unit volume and the amounts of H₂S and NOₓ to be emitted.

Table 11 and FIG. 7 respectively show the cumulative amount of H₂S emitted from catalysts C24 to C28 for 60 seconds after the vehicle halts, as a relative value when the value obtained using catalyst C5 is set to 100.

It is found from Table 11, FIG. 7 and FIG. 8 that when the surface area of the second part per unit volume is reduced, the amount of H₂S to be emitted is reduced whereas when the surface area of the second part per unit volume is increased, the amount of NOₓ to be emitted is reduced. In particular, it is found that when the surface area of the second part per unit volume is designed to be, for example, in a range of 5000 to 10000 m²/L, a reduction in the amount of H₂S to be emitted and a reduction in the amount of NOₓ to be emitted can be both attained at the same time. It is also found that when the surface area of the second part per unit volume is designed to be in a range of 5000 to 7500 m²/L, especially excellent performance is exhibited.

### «Influence of molar ratio of content of precious metals per unit volume in first part to content of precious metals per unit volume in second part»

The relation between the molar ratio of the content of precious metals per unit volume in the first part to the content of precious metals per unit volume in the second part and the amount of NOₓ to be emitted was examined.

Catalysts C29 to C32 were produced in the following manner. Data related to these catalysts is collected in Tables 12 and 13.

**Table 12**

| Catalysts | Whole | First part | | | | | | | |
|---|---|---|---|---|---|---|---|---|---|
| | Surface Area (m²/L) | Slurry | Coating width (%) | Pt (×10⁻³mol/L) | Rh (×10⁻³mol/L) | Ceria (mol/L) | Zirconia (mol/L) | Alumina (mol/L) | Titania (mol/L) |
| C29 | 13000 | SL | 50 | 3.0 | 0.40 | 0.17 | 0.34 | 0.54 | - |
| | | | | 6.0 | 0.80 | 0.34 | 0.68 | 1.08 | |
| C30 | 13000 | SN | 50 | 3.0 | 0.60 | 0.17 | 0.34 | 0.54 | - |
| | | | | 6.0 | 1.20 | 0.34 | 0.68 | 1.08 | |
| C31 | 13000 | SP | 50 | 3.0 | 0.90 | 0.17 | 0.34 | 0.54 | - |
| | | | | 6.0 | 1.80 | 0.34 | 0.68 | 1.08 | |
| C32 | 13000 | SR | 50 | 3.0 | 1.0 | 0.17 | 0.34 | 0.54 | - |
| | | | | 6.0 | 2.00 | 0.34 | 0.68 | 1.08 | |

**Table 13**

| Catalysts | Second Part | | | | | | | |
|---|---|---|---|---|---|---|---|---|
| | Slurry | Coating width (%) | Pt (×10⁻³mol/L) | Rh (×10⁻³mol/L) | Ceria (mol/L) | Zirconia (mol/L) | Alumina (mol/L) | Titania (mol/L) |
| C29 | SM | 50 | - | 0.80 | - | - | 0.68 | - |
| | | | | 1.60 | | | 1.36 | |
| C30 | SO | 50 | - | 0.60 | - | | 0.68 | - |
| | | | | 1.20 | | | 1.36 | |
| C31 | SQ | 50 | - | 0.30 | - | - | 0.68 | - |
| | | | | 0.60 | | | 1.36 | |
| C32 | SS | 50 | - | 0.20 | - | - | 0.68 | - |
| | | | | 0.40 | | | 1.36 | |

Data related to the whole and first part of each of catalysts C29 to C32 is summarized in Table 12. Data related to the second part of each of catalysts C29 to C32 is summarized in Table 13.

### <Example 29: Production of a catalyst C29>

A slurry was prepared in the same manner as slurry SA except that the contents of platinum and rhodium were increased. Hereinafter, this slurry is referred to as "slurry SL".

A slurry was prepared in the same manner as slurry SB except that the dinitrodiamine platinum nitrate solution was omitted and the content of rhodium was decreased. Hereinafter, this slurry is referred to as "slurry SM".

An exhaust gas-purifying catalyst was produced in the same manner as catalyst C1 except that slurry SL was used instead of slurry SA and slurry SM was used instead of slurry SB. Hereinafter, this catalyst is referred to as "catalyst C29".

Each content of materials per unit volume of the catalyst in the first part which was a part corresponding to the coating layer formed using slurry SL among this catalyst C29 was as follows: platinum: 3.0 × 10⁻³ mol/L; rhodium: 0.40 × 10⁻³ mol/L; cerium oxide: 0.17 mol/L; zirconium oxide: 0.34 mol/L; and alumina: 0.54 mol/L.

Each content of materials per unit volume of the catalyst in the second part which was a part corresponding to the coating layer formed using slurry SM among this catalyst C29 was as follows: rhodium: 0.80 × 10⁻³ mol/L; and alumina: 0.68 mol/L.

The surface area of catalyst C29 per unit volume was 13000 m²/L. The molar ratio of content of precious metals per unit volume in first part to content of precious metals per unit volume in second part was 4.25.

### <Example 30: Production of a catalyst C30>

A slurry was prepared in the same manner as slurry SL except that the content of rhodium was increased. Hereinafter, this slurry is referred to as "slurry SN".

A slurry was prepared in the same manner as slurry SM except that the content of rhodium was decreased. Hereinafter, this slurry is referred to as "slurry SO".

An exhaust gas-purifying catalyst was produced in the same manner as catalyst C29 except that slurry SN was used instead of slurry SL and slurry SO was used instead of slurry SM. Hereinafter, this catalyst is referred to as "catalyst C30".

Each content of materials per unit volume of the catalyst in the first part which was a part corresponding to the coating layer formed using slurry SN among this catalyst C30 was as follows: platinum: 3.0 × 10⁻³ mol/L; rhodium: 0.60 × 10⁻³ mol/L; cerium oxide: 0.17 mol/L; zirconium oxide: 0.34 mol/L; and alumina: 0.54 mol/L.

Each content of materials per unit volume of the catalyst in the second part which was a part corresponding to the coating layer formed using slurry SO among this catalyst C30 was as follows: rhodium: 0.60 × 10⁻³ mol/L; and alumina: 0.68 mol/L.

The surface area of catalyst C30 per unit volume was 13000 m²/L. The molar ratio of content of precious metals per unit volume in first part to content of precious metals per unit volume in second part was 6.0.

### <Example 31: Production of a catalyst C31>

A slurry was prepared in the same manner as slurry SN except that the content of rhodium was increased. Hereinafter, this slurry is referred to as "slurry SP".

A slurry was prepared in the same manner as slurry SO except that the content of rhodium was decreased. Hereinafter, this slurry is referred to as "slurry SQ".

An exhaust gas-purifying catalyst was produced in the same manner as catalyst C30 except that slurry SP was used instead of slurry SN and slurry SQ was used instead of slurry SO. Hereinafter, this catalyst is referred to as "catalyst C31".

Each content of materials per unit volume of the catalyst in the first part which was a part corresponding to the coating layer formed using slurry SP among this catalyst C31 was as follows: platinum: 3.0 × 10⁻³ mol/L; rhodium: 0.90 × 10⁻³ mol/L; cerium oxide: 0.17 mol/L; zirconium oxide: 0.34 mol/L; and alumina: 0.54 mol/L.

Each content of materials per unit volume of the catalyst in the second part which was a part corresponding to the coating layer formed using slurry SQ among this catalyst C31 was as follows: rhodium: 0.30 × 10⁻³ mol/L; and alumina: 0.68 mol/L.

The surface area of catalyst C31 per unit volume was 13000 m²/L. The molar ratio of content of precious metals per unit volume in first part to content of precious metals per unit volume in second part was 13.

### <Example 32: Production of a catalyst C32>

A slurry was prepared in the same manner as slurry SP except that the content of rhodium was increased. Hereinafter, this slurry is referred to as "slurry SR".

A slurry was prepared in the same manner as slurry SQ except that the content of rhodium was decreased. Hereinafter, this slurry is referred to as "slurry SS".

An exhaust gas-purifying catalyst was produced in the same manner as catalyst C31 except that slurry SR was used instead of slurry SP and slurry SS was used instead of slurry SQ. Hereinafter, this catalyst is referred to as "catalyst C32".

Each content of materials per unit volume of the catalyst in the first part which was a part corresponding to the coating layer formed using slurry SR among this catalyst C32 was as follows: platinum: 3.0 × 10⁻³ mol/L; rhodium: 1.0 × 10⁻³ mol/L; cerium oxide: 0.17 mol/L; zirconium oxide: 0.34 mol/L; and alumina: 0.54 mol/L.

Each content of materials per unit volume of the catalyst in the second part which was a part corresponding to the coating layer formed using slurry SS among this catalyst C32 was as follows: rhodium: 0.20 × 10⁻³ mol/L; and alumina: 0.68 mol/L.

The surface area of catalyst C32 per unit volume was 13000 m²/L. The molar ratio of content of precious metals per unit volume in first part to content of precious metals per unit volume in second part was 20.

### <Measurement of the amount of NOₓ to be emitted>

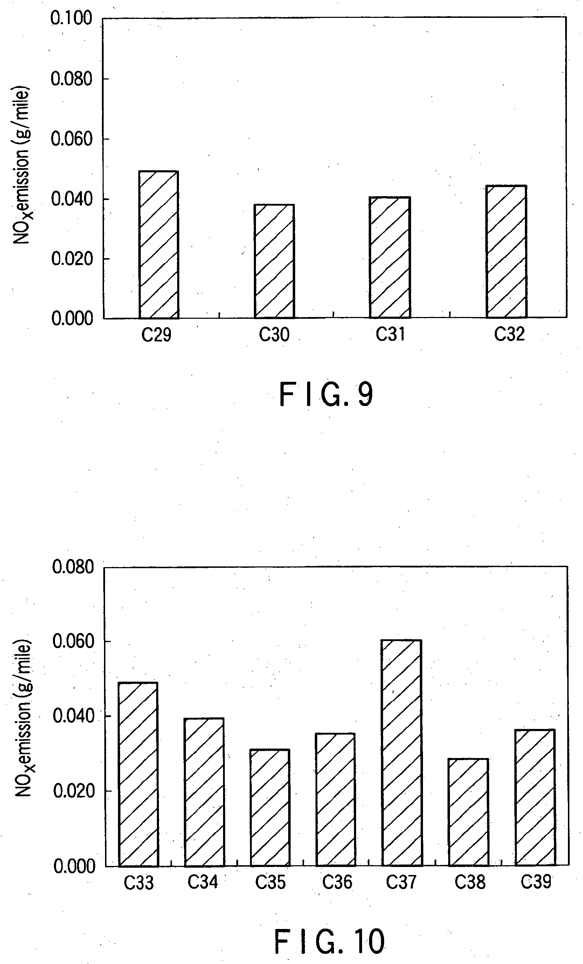

With regard to catalysts C29 to C32, the amount of NOₓ to be emitted was measured in the same method as explained above. The results are shown in the following Table 14 and FIG. 9.

**Table 14**

| Catalysts | Ratio of precious metals | Amounts of NOx emitted (g/mile) |
|---|---|---|
| C29 | 4.25 | 0.049 |
| C30 | 6.0 | 0.038 |
| C31 | 13 | 0.040 |
| C32 | 20 | 0.044 |

The molar ratio of the content of precious metals in the first part to the content of precious metals in the second part in each of catalysts C29 to C32, and the amount of NOₓ to be emitted when these catalysts are used are summarized in Table 14. In Table 14, the molar ratio of the content of precious metals in the first part to the content of precious metals in the second part is described in the column "Ratio of precious metals".

FIG. 9 is a bar graph showing the amount of NOₓ to be emitted. FIG. 9 shows the relation between the molar ratio of the content of precious metals in the first part to the content of precious metals in the second part and the amount of NOₓ to be emitted.

It is found from Table 14 and FIG. 9 that particularly excellent NOₓ purification performance can be attained by designing the molar ratio of precious metals in the first part to precious metals in the second part to be in a range of 6.0 to 13.

### <<Influence of composition of first part>>

The relation between the composition of the first part of the exhaust gas-purifying catalyst and the amount of NOₓ to be emitted was examined.

Catalysts C33 to C39 were produced in the following manner. Data related to these catalysts is collected in Tables 15 and 16.

**Table 15**

| Catalysts | Whole | First Part | | | | | | | | | |
|---|---|---|---|---|---|---|---|---|---|---|---|
| | Surface Area (m²/L) | Slurry | Coating width (%) | Pt (×10⁻³mol/L) | Rh (×10⁻³mol/L) | Ceria (mol/L) | Lanthanum oxide (mol%) | Yttrium oxide (mol%) | Zirconia (mol/L) | Alumina (mol/L) | Titania (mol/L) |
| C33 | 13000 | ST | 50 | 2.5 | 0.20 | 0.03 | - | - | 0.37 | 0.54 | - |
| | | | | 5.0 | 0.40 | 0.06 | | | 0.74 | 1.08 | |
| C34 | 13000 | SU | 50 | 2.5 | 0.20 | 0.06 | - | - | 0.33 | 0.54 | - |
| | | | | 5.0 | 0.40 | 0.12 | | | 0.66 | 1.08 | |
| C35 | 13000 | SV | 50 | 2.5 | 0.20 | 0.06 | - | - | 0.28 | 0.54 | - |
| | | | | 5.0 | 0.40 | 0.12 | | | 0.56 | 1.08 | |
| C36 | 13000 | SW | 50 | 2.5 | 0.20 | 0.12 | - | - | 0.24 | 0.54 | - |
| | | | | 5.0 | 0.40 | 0.24 | | | 0.48 | 1.08 | |
| C37 | 13000 | SX | 50 | 2.5 | 0.20 | 0.15 | - | - | 0.20 | 0.54 | - |
| | | | | 5.0 | 0.40 | 0.30 | | | 0.40 | 1.08 | |
| C38 | 13000 | SY | 50 | 2.5 | 0.20 | 0.09 | 2.0 | 3.0 | 0.28 | 0.54 | - |
| | | | | 5.0 | 0.40 | 0.18 | 4.0 | 6.0 | 0.56 | 1.08 | |
| C39 | 13000 | SZ | 50 | 2.5 | 0.20 | 0.17 | - | - | 0.34 | | - |
| | | | | 5.0 | 0.40 | 0.34 | | | 0.68 | 0 | |

**Table 16**

| Catalysts | Second Part | | | | | | | |
|---|---|---|---|---|---|---|---|---|
| | Slurry | Coating width (%) | Pt (×10⁻³mol/L) | Rh (×10⁻³mol/L) | Ceria (mol/L) | Zirconia (mol/L) | Alumina (mol/L) | Titania (mol/L) |
| C33 | SB | 50 | 0.50 | 1.0 | - | - | 0.68 | - |
| | | | 1.00 | 2.0 | | | 1.36 | |
| C34 | SB | 50 | 0.50 | 1.0 | - | - | 0.68 | - |
| | | | 1.00 | 2.0 | | | 1.36 | |
| C35 | SB | 50 | 0.50 | 1.0 | - | - | 0.68 | - |
| | | | 1.00 | 2.0 | | | 1.36 | |
| C36 | SB | 50 | 0.50 | 1.0 | | - | 0.68 | - |
| | | | 1.00 | 2.0 | | | 1.36 | |
| C37 | SB | 50 | 0.50 | 1.0 | - | - | 0.68 | - |
| | | | 1.00 | 2.0 | | | 1.36 | |
| C38 | SB | 50 | 0.50 | 1.0 | - | - | 0.68 | - |
| | | | 1.00 | 2.0 | | | 1.36 | |
| C39 | SB | 50 | 0.50 | 1.0 | - | - | 0.68 | - |
| | | | 1.00 | 2.0 | | | 1.36 | |

Data related to the whole or first part of each of catalysts C33 to C38 is summarized in Table 15. The content of each of cerium oxide and zirconium oxide in the composite oxide thereof is described in each of the columns "Cerium oxide" and "Zirconium oxide" in Table 15. Further, the amount of each of lanthanum oxide and yttrium oxide to be added in the composite oxide of cerium oxide and zirconium oxide is described in terms of "mol %" in each of the columns "Lanthanum oxide" and "Yttrium oxide". Data related to the second part in each of catalysts C33 to C38 is summarized in Table 16.

### <Example 33: Production of a catalyst C33>

A slurry was prepared in the same manner as slurry SA except that the powder of composite oxide of cerium oxide and zirconium oxide was used instead of cerium oxide powder and zirconium oxide powder. Hereinafter, this slurry is referred to as "slurry ST".

An exhaust gas-purifying catalyst was produced in the same manner as catalyst C1 except that slurry ST was used instead of slurry SA. Hereinafter, this catalyst is referred to as "catalyst C33".

Each content of materials per unit volume of the catalyst in the first part which was a part corresponding to the coating layer formed using slurry ST among this catalyst C33 was as follows: platinum: 2.5 × 10⁻³ mol/L; rhodium: 0.20 × 10⁻³ mol/L; cerium oxide: 0.03 mol/L; zirconium oxide: 0.37 mol/L; and alumina: 0.54 mol/L.

Each content of materials per unit volume of the catalyst in the second part which was a part corresponding to the coating layer formed using slurry SB among this catalyst C33 was as follows: platinum: 0.5 × 10⁻³ mol/L; rhodium: 1.0 × 10⁻³ mol/L; and alumina: 0.68 mol/L.

The surface area of catalyst C33 per unit volume was 13000 m²/L. The molar ratio of zirconium oxide to cerium oxide in the aforementioned composite oxide contained in the first part was 12.

### <Example 34: Production of a catalyst C34>

A slurry was prepared in the same manner as slurry ST except that the composite oxide higher in the content of cerium was used. Hereinafter, this slurry is referred to as "slurry SU".

An exhaust gas-purifying catalyst was produced in the same manner as catalyst C33 except that slurry SU was used instead of slurry ST. Hereinafter, this catalyst is referred to as "catalyst C34".

Each content of materials per unit volume of the catalyst in the first part which was a part corresponding to the coating layer formed using slurry SU among this catalyst C34 was as follows: platinum: 2.5 × 10⁻³ mol/L; rhodium: 0.20 × 10⁻³ mol/L; cerium oxide: 0.06 mol/L; zirconium oxide: 0.33 mol/L; and alumina: 0.54 mol/L.

Each content of materials per unit volume of the catalyst in the second part which was a part corresponding to the coating layer formed using slurry SB among this catalyst C34 was as follows: platinum: 0.5 x 10⁻³ mol/L; rhodium: 1.0 × 10⁻³ mol/L; and alumina: 0.68 mol/L.

The surface area of catalyst C34 per unit volume was 13000 m²/L. The molar ratio of zirconium oxide to cerium oxide in the aforementioned composite oxide contained in the first part was 5.5.

### <Example 35: Production of a catalyst C35>

A slurry was prepared in the same manner as slurry SU except that the composite oxide higher in the content of cerium was used. Hereinafter, this slurry is referred to as "slurry SV".

An exhaust gas-purifying catalyst was produced in the same manner as catalyst C34 except that slurry SV was used instead of slurry SU. Hereinafter, this catalyst is referred to as "catalyst C35".

Each content of materials per unit volume of the catalyst in the first part which was a part corresponding to the coating layer formed using slurry SV among this catalyst C35 was as follows: platinum: 2.5 × 10⁻³ mol/L; rhodium: 0.20 × 10⁻³ mol/L; cerium oxide: 0.09 mol/L; zirconium oxide: 0.28 mol/L; and alumina: 0.54 mol/L.

Each content of materials per unit volume of the catalyst in the second part which was a part corresponding to the coating layer formed using slurry SB among this catalyst C35 was as follows: platinum: 0.5 × 10⁻³ mol/L; rhodium: 1.0 × 10⁻³ mol/L; and alumina: 0.68 mol/L.

The surface area of catalyst C35 per unit volume was 13000 m²/L. The molar ratio of zirconium oxide to cerium oxide in the aforementioned composite oxide contained in the first part was 3.1.

### <Example 36: Production of a catalyst C36>

A slurry was prepared in the same manner as slurry SV except that the composite oxide higher in the content of cerium was used. Hereinafter, this slurry is referred to as "slurry SW".

An exhaust gas-purifying catalyst was produced in the same manner as catalyst C35 except that slurry SW was used instead of slurry SV. Hereinafter, this catalyst is referred to as "catalyst C36".

Each content of materials per unit volume of the catalyst in the first part which was a part corresponding to the coating layer formed using slurry SW among this catalyst C36 was as follows: platinum: 2.5 × 10⁻³ mol/L; rhodium: 0.20 × 10⁻³ mol/L; cerium oxide: 0.12 mol/L; zirconium oxide: 0.24 mol/L; and alumina: 0.54 mol/L.

Each content of materials per unit volume of the catalyst in the second part which was a part corresponding to the coating layer formed using slurry SB among this catalyst C36 was as follows: platinum: 0.5 × 10⁻³ mol/L; rhodium: 1.0 × 10⁻³ mol/L; and alumina: 0.68 mol/L.

The surface area of catalyst C36 per unit volume was 13000 m²/L. The molar ratio of zirconium oxide to cerium oxide in the aforementioned composite oxide contained in the first part was 2.0.

### <Example 37: Production of a catalyst C37>

A slurry was prepared in the same manner as slurry SW except that the composite oxide higher in the content of cerium was used. Hereinafter, this slurry is referred to as "slurry SX".

An exhaust gas-purifying catalyst was produced in the same manner as catalyst C36 except that slurry SX was used instead of slurry SW. Hereinafter, this catalyst is referred to as "catalyst C37".

Each content of materials per unit volume of the catalyst in the first part which was a part corresponding to the coating layer formed using slurry SX among this catalyst C37 was as follows: platinum: 2.5 × 10⁻³ mol/L; rhodium: 0.20 × 10⁻³ mol/L; cerium oxide: 0.15 mol/L; zirconium oxide: 0.20 mol/L; and alumina: 0.54 mol/L.

Each content of materials per unit volume of the catalyst in the second part which was a part corresponding to the coating layer formed using slurry SB among this catalyst C37 was as follows: platinum: 0.5 × 10⁻³ mol/L; rhodium: 1.0 × 10⁻³ mol/L; and alumina: 0.68 mol/L.

The surface area of catalyst C37 per unit volume was 13000 m²/L. The molar ratio of zirconium oxide to cerium oxide in the aforementioned composite oxide contained in the first part was 1.3.

### <Example 38: Production of a catalyst C38>

A slurry was prepared in the same manner as slurry SV except that lanthanum oxide and yttrium oxide were added. Hereinafter, this slurry is referred to as "slurry SY".

An exhaust gas-purifying catalyst was produced in the same manner as catalyst C35 except that slurry SY was used instead of slurry SV. Hereinafter, this catalyst is referred to as "catalyst C38".

Each content of materials per unit volume of the catalyst in the first part which was a part corresponding to the coating layer formed using slurry SY among this catalyst C38 was as follows: platinum: 2.5 × 10⁻³ mol/L; rhodium: 0.20 × 10⁻³ mol/L; cerium oxide: 0.09 mol/L; zirconium oxide: 0.28 mol/L; and alumina: 0.54 mol/L. The content of lanthanum oxide was 2 mol% based on the content of the composite oxide of cerium oxide and zirconium oxide. The content of yttrium oxide was 3 mol% based on the content of the composite oxide of cerium oxide and zirconium oxide.

Each content of materials per unit volume of the catalyst in the second part which was a part corresponding to the coating layer formed using slurry SB among this catalyst C38 was as follows: platinum: 0.5 × 10⁻³ mol/L; rhodium: 1.0 × 10⁻³ mol/L; and alumina: 0.68 mol/L.

The surface area of catalyst C38 per unit volume was 13000 m²/L. The molar ratio of zirconium oxide to cerium oxide in the aforementioned composite oxide contained in the first part was 3.1.

### <Example 39: Production of a catalyst C39>

A slurry was prepared in the same manner as slurry SA except that the powder of composite oxide of cerium oxide and zirconium oxide was used instead of cerium oxide powder and zirconium oxide powder. Hereinafter, this slurry is referred to as "slurry SZ".

An exhaust gas-purifying catalyst was produced in the same manner as catalyst C1 except that slurry SZ was used instead of slurry SA. Hereinafter, this catalyst is referred to as "catalyst C39".

Each content of materials per unit volume of the catalyst in the first part which was a part corresponding to the coating layer formed using slurry SZ among this catalyst C39 was as follows: platinum: 2.5 × 10⁻³ mol/L; rhodium: 0.20 × 10⁻³ mol/L; cerium oxide: 0.17 mol/L; zirconium oxide: 0.34 mol/L; and alumina: 0.54 mol/L.

Each content of materials per unit volume of the catalyst in the second part which was a part corresponding to the coating layer formed using slurry SB among this catalyst C39 was as follows: platinum: 0.5 × 10⁻³ mol/L; rhodium: 1.0 × 10⁻³ mol/L; and alumina: 0.68 mol/L.

The surface area of catalyst C39 per unit volume was 13000 m²/L. The molar ratio of zirconium oxide to cerium oxide in the aforementioned composite oxide contained in the first part was 2.0.

### <Measurement of the amount of NOₓ to be emitted>

With regard to each of catalysts C33 to C39, the amount of NOₓ to be emitted was measured in the same method as explained above. The results are shown in the following Table 17 and FIG. 10.

**Table 17**

| Catalysts | Ratio of zirconia/ceria (first part) | Amounts of NOx emitted (g/mile) |
|---|---|---|
| C33 | 12 | 0.048 |
| C34 | 5.5 | 0.039 |
| C35 | 3.1 | 0.030 |
| C36 | 2.0 | 0.034 |
| C37 | 1.3 | 0.060 |
| C38 | 3.1 | 0.028 |
| C39 | 2.0 | 0.035 |

The molar ratio of zirconium oxide to cerium oxide in the first part of each of catalysts C33 to C39, and the amount of NOₓ to be emitted when these catalysts are used are summarized in Table 17. In Table 17, the molar ratio of zirconium oxide to cerium oxide in the first part is described in the column "Ratio of zirconia/ceria".

FIG. 10 is a bar graph showing the amount of NOₓ to be emitted. FIG. 10 shows the relation between the composition of the first part of the catalyst and the amount of NOₓ to be emitted.

It is found from Table 17 and FIG. 10 that particularly excellent NOₓ purification performance can be attained by designing the molar ratio of zirconium oxide to cerium oxide in the first part to be in a range of 2.0 to 12. Further, when this ratio is designed to be in a range of 2.0 to 5.5, more excellent NOₓ purification performance can be attained.

Moreover, when this ratio is designed to be in a range of 3.1 to 5.5, even more excellent NOₓ purification performance can be attained.

Further, it is found from Table 17 and FIG. 10 that particularly excellent NOₓ purification performance can be attained by adopting an embodiment in which the first part further comprises lanthanum oxide and yttrium oxide.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. An exhaust gas-purifying catalyst comprising:
a substrate provided with one or more through-holes through which exhaust gas flows; and
a catalyst layer supported by the substrate and containing precious metals supported by a support,
the exhaust gas-purifying catalyst comprising a first part to which the exhaust gas is supplied, and a second part to which the exhaust gas having passed through the first part is supplied and which is smaller in the content of the oxygen storage material per unit volume than the first part,
wherein the support in the first part is an oxygen storage material or a mixture or composite oxide of the oxygen storage material and other oxides, the oxygen storage material being selected from the group consisting of oxides of rare earth metals, oxides of transition metals, and mixtures and composites thereof,
the support in the second part is oxides other than an oxygen storage material, or a mixture or a composite oxide of the oxide other than an oxygen storage material and an oxygen storage material;
the precious metals contained in the first part are platinum and rhodium and the precious metal contained in the second part is rhodium;
the molar ratio of precious metals of the first part per unit volume to that of the second part per unit volume is in a range of 5 to 15;
the catalyst has a surface area per unit volume in a range of 5000 to 23000 m²/L; and
the surface area of the second part per unit volume is in a range of 5000 to 7500 m²/L.

2. The exhaust gas-purifying catalyst according to claim 1, wherein the catalyst layer contains the oxygen storage material in an amount of 0.05 to 0.6 mol/L of the exhaust gas-purifying catalyst.

3. The exhaust gas-purifying catalyst according to claim 1 or 2, wherein only the first part or both the first and second parts contain the oxygen storage material and the ratio of the content of the oxygen storage material per unit volume in the second part to the content of the oxygen storage material per unit volume in the first part is 0.5 or less.

4. The exhaust gas-purifying catalyst according to any one of claims 1 to 3, wherein the content of the oxygen storage material per unit volume in the second part is 0.30 mol/L or less.

5. The exhaust gas-purifying catalyst according to claim 3 or 4, wherein the dimension of the second part along the direction of the flow of the exhaust gas is 15 to 85% of the dimension of the substrate along the direction of the flow.

6. The exhaust gas-purifying catalyst according to any one of claims 3 to 5, wherein the second part is smaller in surface area per unit volume than the first part.

7. The exhaust gas-purifying catalyst according to any one of claims 3 to 6, wherein the first part contains cerium oxide as the oxygen storage material.

8. The exhaust gas-purifying catalyst according to claim 7, wherein the first part contains a composite oxide of the cerium oxide and zirconium oxide and the molar ratio of the zirconium oxide to the cerium oxide in the first part is in a range of 2 to 12.

9. The exhaust gas-purifying catalyst according to any one of claims 3 to 8, wherein the catalyst layer further contains at least one element selected from the group consisting of titanium, tungsten, silicon, molybdenum, phosphorous and niobium.

## Patentansprüche

1. Ein Abgasreinigungskatalysator aufweisend:
ein mit einer oder mehreren Durchgangsöffnungen versehenes Substrat, durch welches Abgas strömt; und
eine vom Substrat geträgerte und Edelmetalle, die von einem Träger geträgert werden, enthaltende Katalysatorschicht,
wobei der Abgasreinigungskatalysator einen ersten Abschnitt umfasst, dem das Abgas zugeführt wird und einen zweiten Abschnitt, dem das Abgas zugeführt wird, welches den ersten Abschnitt passiert hat, und dessen Gehalt an Sauerstoffspeichermatieral pro Volumeneinheit kleiner ist als der des ersten Abschnitts,
wobei der Träger im ersten Abschnitt ein Sauerstoffspeichermaterial oder eine Mischung oder Mischoxide des Sauerstoffspeichermaterials und anderer Oxide ist, wobei das Sauerstoffspeichermaterial ausgewählt ist aus der Gruppe bestehend aus Oxiden von Seltenerdenmetallen, Oxiden von Übergangsmetallen, und Mischungen und Mischoxiden davon,
wobei der Träger im zweiten Abschnitt aus anderen Oxiden besteht als ein Sauerstoffspeichermaterial, oder eine Mischung oder Mischoxide von anderen Oxiden eines Sauerstoffspeichermaterials und eines Sauerstoffspeichermaterials;
wobei die im ersten Abschnitt enthaltenen Edelmetalle Platin und Rhodium sind und das im zweiten Abschnitt enthaltene Edelmetall Rhodium ist;
wobei das molare Verhältnis von Edelmetall des ersten Abschnitts pro Volumeneinheit zum zweiten Abschnitt pro Volumeneinheit im Bereich von 5 bis 15 liegt;
wobei der Katalysator eine Oberfläche pro Volumeneinheit im Bereich von 5000 bis 23000 m²/L hat; und
die Oberfläche des zweiten Abschnitts pro Volumeneinheit im Bereich von 5000 bis 7000 m²/L liegt.

2. Abgasreinigungskatalysator nach Anspruch 1, wobei die Katalysatorschicht das Sauerstoffspeichermaterial in einer Menge von 0,05 bis 0,6 mol/L, bezogen auf den Abgasreinigungskatalysator, enthält.

3. Abgasreinigungskatalysator nach Anspruch 1 oder 2, wobei nur der erste Abschnitt oder sowohl der erste und zweite Abschnitt das Sauerstoffspeichermaterial enthalten und das Verhältnis des Gehalts des Sauerstoffspeichermaterials pro Volumeneinheit im zweiten Abschnitt zum Gehalt des Sauerstoffspeichermaterials pro Volumeneinheit im ersten Abschnitt 0,5 oder geringer ist.

4. Abgasreinigungskatalysator nach einem der Ansprüche 1 bis 3, wobei der Gehalt an Sauerstoffspeichermaterial pro Volumeneinheit im zweiten Abschnitt 0,30 mol/L oder geringer ist.

5. Abgasreinigungskatalysator nach Anspruch 3 oder 4, wobei die Dimension des zweiten Abschnitts entlang der Richtung des Abgasstromes 15 bis 85% der Dimension des Substrats entlang der Flussrichtung ist.

6. Abgasreinigungskatalysator nach einem der Ansprüche 3 bis 5, wobei die Oberfläche pro Volumeinheit des zweiten Abschnitts kleiner als die des ersten Abschnitts ist.

7. Abgasreinigungskatalysator nach einem der Ansprüche 3 bis 6, wobei der erste Abschnitt Ceroxid als Sauerstoffspeichermaterial enthält.

8. Abgasreinigungskatalysator nach Anspruch 7, wobei der erste Abschnitt ein Mischoxid von Ceroxid und Zirconiumdioxid enthält und das Molverhältnis des Zirconiumdioxid zum Ceroxid im ersten Abschnitt im Bereich von 2 bis 12 ist.

9. Abgasreinigungskatalysator nach einem der Ansprüche 3 bis 8, wobei die Katalysatorschicht weiterhin wenigstens ein Element enthält ausgewählt aus der Gruppe bestehend aus Titan, Wolfram, Silizium, Molybdän, Phosphor und Niob.

## Revendications

1. Catalyseur de purification de gaz d'échappement comprenant :
un substrat doté d'un ou de plusieurs trous de passage à travers lesquels s'écoule un gaz d'échappement ; et
une couche de catalyseur supportée par le substrat et contenant des métaux précieux supportés par un support,
le catalyseur de purification de gaz d'échappement comprenant une première partie dans laquelle le gaz d'échappement est alimenté, et une seconde partie dans laquelle le gaz d'échappement ayant traversé la première partie est alimenté et qui a une teneur en matériau de stockage d'oxygène par unité de volume inférieure à celle de la première partie,
dans lequel le support dans la première partie est un matériau de stockage d'oxygène ou un mélange ou un oxyde composite du matériau de stockage d'oxygène et d'autres oxydes, le matériau de stockage d'oxygène étant choisi dans le groupe constitué des oxydes de métaux des terres rares, des oxydes de métaux de transition et des mélanges et des composites de ceux-ci,
le support dans la seconde partie est constitué d'oxydes autres qu'un matériau de stockage d'oxygène ou un mélange ou un oxyde composite de l'oxyde autre qu'un matériau de stockage d'oxygène et d'un matériau de stockage d'oxygène ;
les métaux précieux contenus dans la première partie sont le platine et le rhodium et le métal précieux contenu dans la seconde partie est le rhodium ;
le rapport molaire des métaux précieux de la première partie par unité de volume à celui de la seconde partie par unité de volume est dans une plage de 5 à 15 ;
le catalyseur a une aire de surface par unité de volume dans une plage de 5 000 à 23 000 m²/L ; et
l'aire de surface de la seconde partie par unité de volume est dans une plage de 5 000 à 7 500 m²/L.

2. Catalyseur de purification de gaz d'échappement selon la revendication 1, dans lequel la couche de catalyseur contient un matériau de stockage d'oxygène en une quantité de 0,05 à 0,6 mol/L du catalyseur de purification de gaz d'échappement.

3. Catalyseur de purification de gaz d'échappement selon la revendication 1 ou 2, dans lequel seule la première partie ou à la fois la première partie et la seconde partie contiennent le matériau de stockage d'oxygène et le rapport de la teneur du matériau de stockage d'oxygène par unité de volume dans la seconde partie à la teneur du matériau de stockage d'oxygène par unité de volume dans la première partie est de 0,5 ou moins.

4. Catalyseur de purification de gaz d'échappement selon l'une quelconque des revendications 1 à 3, dans lequel la teneur du matériau de stockage d'oxygène par unité de volume dans la seconde partie est de 0,30 mol/L ou moins.

5. Catalyseur de purification de gaz d'échappement selon la revendication 3 ou 4, dans lequel la dimension de la seconde partie dans la direction d'écoulement du gaz d'échappement est de 15 à 85 % la dimension du substrat dans la direction d'écoulement.

6. Catalyseur de purification de gaz d'échappement selon l'une quelconque des revendications 3 à 5, dans lequel la seconde partie a une aire de surface par unité de volume inférieure à celle de la première partie.

7. Catalyseur de purification de gaz d'échappement selon l'une quelconque des revendications 3 à 6, dans lequel la première partie contient de l'oxyde de cérium en tant que matériau de stockage d'oxygène.

8. Catalyseur de purification de gaz d'échappement selon la revendication 7, dans lequel la première partie contient un oxyde composite d'oxyde de cérium et d'oxyde de zirconium et le rapport molaire de l'oxyde de zirconium à l'oxyde de cérium dans la première partie est dans une plage de 2 à 12.

9. Catalyseur de purification de gaz d'échappement selon l'une quelconque des revendications 3 à 8, dans lequel la couche de catalyseur contient en outre au moins un élément choisi dans le groupe constitué du titane, du tungstène, du silicium, du molybdène, du phosphore et du niobium.
